# EUROPEAN PATENT SPECIFICATION

(11) **EP 4 389 710 B1**
(45) Date of publication and mention of the grant of the patent: **29.10.2025**
(21) Application number: 22214659.9
(22) Date of filing: 19.12.2022
(51) Int. Cl.: C02F 1/00, C02F 103/02

(54) **PURE WATER SUPPLY SYSTEM**
REINWASSERVERSORGUNGSSYSTEM
SYSTÈME D'ALIMENTATION EN EAU PURE

(43) Date of publication of application: 26.06.2024
(73) Proprietor: boTec GmbH, 65185 Wiesbaden (DE)
(72) Inventor: SCHÖNER, Martin, 74330 Epagny Metz-Tessy (FR); SCHNEIDER, Jörg, 65343 Eltville (DE)
(74) Representative: Richardt Patentanwälte PartG mbB

(56) References cited:
- KR-A- 20130 110 424

## Description

### Field of the invention

The invention relates generally to a water purification and distribution system that can supply a plurality of take-off points with pure water.

### Background and related art

There are presently a variety of industrial and medical devices used to purify water to meet microbiological and other purity requirements. Water microbiological purity can be measured e.g. by culturing and counting the number of biological cells and/or the byproducts of damaged or dead biological cells in a given water sample volume. The water microbiological purity requirements for an application are most often stated in terms of maximum limits for Colony Forming Units (CFU) and Endotoxin Units (EU) per milliliter of water, that is, CFU/ml and EU/ml respectively. Typically, pure water also has to meet chemical and physical purity requirements.

Various systems and techniques exist for generating purified water. However, even if the water generated by the purification system meets all quality standards, there is always the risk that water is contaminated while being delivered to its point of usage or while being stored in a pure water storage tank. This is because various bacteria and other microorganisms are able to find, over time, sites within the system to inhabit and proliferate and form biofilms. Therefore water purification devices require a means to maintain system microbiological cleanliness. These include, but are not limited to, chemical disinfection, heat disinfection and flushing on a continuous or periodic basis.

Ensuring the purity of the water delivered to its point of usage is of crucial importance in various fields of technology. For example, pure water is needed for the manufacturing of pharmaceutical products, for the manufacturing of various water-based liquids used in the chemical and pharmaceutical industry and by manufacturers of laboratory products for laboratory needs in research and industry. If contamination of the water is detected at one or more water take-off points, it is often necessary to destroy entire production batches.

A further problem associated with the supply of purified water is that the water supply to a take-off point must be reliably maintained until it is no longer needed. In particular in the context of using purified water in a product manufacturing workflow, a stalled or interrupted water supply can lead to a wrong product composition (insufficient amount of water in the product) which may also necessitate the destruction of entire production batches. Halting the production process is often not an option, in particular when the water needs to be added at a predefined time point during an ongoing chemical reaction or manufacturing workflow.

United States Patent Application 2009/0134080 A1 discloses an example of a system for producing and distributing water of microbiological quality.

The Korean patent application KR 2013 0110424 A (MICROFILTER CO LTO [KR], 10 October 2013 describes a system for centrally supplying several household appliances with filtered water, which consists of a filter module, a storage module and a central control module. The system comprises a filter module that filters tap water, a storage module with a central tank, a distributor and a control module. It can be used, for example, for fitted kitchens in households, office kitchens and catering establishments. **Summary**

It is an objective of the present invention to provide for an improved pure water supply system and method of providing pure water to a plurality of take-off points as specified in the independent claims. Embodiments of the invention are given in the dependent claims. Embodiments of the present invention can be freely combined with each other if they are not mutually exclusive.

In one aspect, the invention relates to a pure water supply system as specified in claim 1. The pure water supply system comprises: a water purification system for producing purified water at a controlled rate, wherein the purified water is to be used for a manufacturing process; a storage tank for storing purified water, the storage tank being fluidly coupled to the water purification system; a purified water distribution system having a plurality of water take-off points, the purified water distribution system being fluidically coupled to the storage tank; a controllable supply pump for controlling the flow rate of the purified water in the purified water distribution system; and a controller.

The controller is configured to control the purified water production rate of the water purification system to provide a filling level of the storage tank, and to control the supply pump to continuously pump the purified water in the purified water distribution system such that a minimum rate is maintained.

The controller is further configured to:
- receive the actual filling level of the storage tank,
- receive water take-off profiles of respective ones of the take-off points, wherein the take-off profiles are indicative of the purified water consumption rate of the respective take-off points observed in the past, wherein the profiles are defined by a user via a GUI by selecting sub-intervals of an observation time interval, the sub- interval covering one or more time intervals wherein one of the take-off points was open and consumed water, or wherein the profiles are determined automatically by a software program configured to analyze the observed purified water consumption rates of the take-off points during multiple observation time intervals in the past
- predict, using the actual filling level and the received profiles, if a sufficient water supply can be maintained,
- in response to the prediction indicating an un-sufficient water supply, performing at least one action of a group of actions comprising:
   o controlling the purified water production rate of the water purification system to increase the water production to prevent the predicted purified water shortage for the manufacturing process.

Optionally, the group of actions may in addition comprise:
- selecting at least one of the take-off points in accordance with predefined priorities being assigned to the take-off points and switching off or disabling switching on the selected at least one take-off point.

This may be advantageous as embodiments of the invention may allow providing purified water to a large number of take-off points without the need for a very large storage tank or a very powerful water purification system. In order to provide purified water to a large number of consumers (take-off points), it was previously common to use very large water tanks and to fill them to their capacity with purified water. The intention was to use a big, completely filled tank to compensate for unpredictable fluctuations in water consumption due to the unpredictable opening and closing of individual take-off points. The tanks were often dimensioned in such a way that they could always cover the theoretically possible maximum demand to ensure a breakdown of a production process as a consequence of an unexpected shortage of purified water was prevented.

One out of many problems associated with this approach is that the theoretically possible maximum demand is often hard to predict and subjected to changes. For example, the theoretically possible maximum demand depends on the number and type of take-off points and other equipment of the system, their opening and closing times, and the type of manufacturing processes associated with a respective take-off point. In particular for systems with a large number of take-off points which are opened only occasionally, and/or which may serve different manufacturing workflows which may frequently change over, the theoretically possible maximum demand is much larger than the real demand, so using a tank that meets the theoretically possible maximum demand is a highly expensive and inefficient approach.

By using, according to embodiments of the invention, water consumption profiles of at least some of the take-off points of the pure water supply system to predict whether there will be enough purified water to meet respective needs (e.g. to supply all currently open take-off points and, in some embodiments, to optionally supply purified water also to one or more of the currently closed take-off points with purified water), and by taking appropriate measures to remedy or limit the problem if the prediction returns that there will not be enough purified water available, it is possible to prevent an unexpected water shortage, thereby preventing the corresponding negative consequences of this purified water shortage for a manufacturing process.

An advantage of embodiments of the invention may be that the required size of the water tank is reduced, because it is now no longer necessary to keep such a large quantity of purified water on hand that it is sufficient in the rare event that all or almost all take-off points are open (active). If, in a particular case, the situation really arises that the purified water is currently or in the foreseeable future not sufficient to provide sufficient water, the additional take-off point is simply not activated (or, if necessary, another, non-important take-off point is closed) in order to prevent a water shortage from the beginning. The damage caused by not starting/delaying the start of a production process is usually many times smaller than the damage that occurs when a water shortage at a take-off point unexpectedly occurs during an ongoing production process.

Another advantage may be that the maximum supported purified water output rate of the water purification system, in the following referred to as the "purification power", may also be reduced. In some prior art systems, the purification power of the water purification system was selected to be sufficient to serve even a theoretically possible peak consumption when all take-off points of the system were activated simultaneously. This was accompanied by very high expenses for appropriately powerful water purification systems and/or by limiting the number and the maximum allowed water withdrawal rate of the take-off points. However, since in most cases only a few take-off points are open at the same time, the dimensioning of the water purification system and/or the limitation of the number and water consumption rates of the take-off points, the overall costs of these prior art pure water supply systems were high. From a technical point of view, these prior-art systems imbalanced, since the purification power of the water purification system and/or the size of the storage tank was normally completely oversized with respect to the actual demand. The use of consumption profiles to predict the probable water consumption may allow avoiding these disadvantages. This is also important in terms of cost and material consumption in that many water purification systems consume a significant amount of energy (e.g. for heating or for adding ozone and generating UV irradiation) and materials (e.g. filters) during operation, with the consumption of energy and materials often correlating positively with the purification power of the water purification system.

Another advantage may be that by performing profile-based prediction of likely water consumption and taking appropriate action, the risk of contamination is reduced. For the above reasons, embodiments of the invention may help to make the water purification system, and in particular the purified water storage tank, smaller in size than is required in other systems known in the prior art. Especially in large or oversized water tanks and also some water purification systems, if large quantities of pure water are generated or stored, which are not consumed promptly, areas can arise in which the water is stalled, i.e. moves only very slowly or not at all. This promotes the formation of biofilms. Although regular cleaning cycles like heating or ozonation of the water in the tank and/or other parts of the pure water supply system can partially prevent the formation of biofilms or kill the bacteria in the biofilms that have already formed, this is associated with considerable energy consumption, especially in very large tanks. Both the risk of contamination and the cost of regularly heating unused, already purified water, can be significantly reduced according to embodiments of the invention.

A "sufficient water supply" as used herein is a purified water provisioning rate which is sufficient to meet one or more criteria, e.g., that all currently open take-off points and optionally also further take-off points predicted or scheduled to be opened in the future will receive sufficient water such that their respective water consumption rate can be supported. The criteria for a sufficient supply may vary. For example, a sufficient supply may be the totality of water in the purified water storage tank and optionally in addition the totality of purified water that can be produced by the water purification system up to a future point in time provided that the volume of this totality of water is larger than the total volume predicted to be consumed by one or more of the consumers till the said future moment in time plus a predefined safety margin volume. The total volume of purified water to be consumed may be predicted e.g. solely based on the currently open take-off points, or optionally based in addition on one or more of the currently closed take-off points predicted to open till the future moment in time. In some embodiments, an insufficient water supply is predicted for a future time t if the profiles of all take-off points predicted to or scheduled to be opened at least temporarily till this future time t will result in the fill level of the tank falling below a minimum fill level threshold.

The priorities of the take-off points may indicate the importance of the take-off points for ongoing and/or future manufacturing processes. The importance may be defined e.g. in metadata stored in association with an identifier of the respective take-off points and/or stored in association with the profile of the take-off point. The importance may be defined with respect to the technical or medical damage caused by a water shortage at a given take-off point for the production process executed at that take-off point, and/or may in some embodiments indicative of the economic damage caused by a water shortage at a take-off point.

A further benefit may be that by predicting the future purified water consumption of one or more of the take-off points, the controller may prevent the need to sterilize the tank and/or the pipes or may reduce the frequency of sterilization operations needed to maintain the system. If a shortage of purified water occurs in the system, this may not only compromise the products generated at a take-off point where the water shortage happened, it may in some cases even result in the obligation to conduct a sterilization of the tank and/or the purified water distribution system. This may be highly expensive and may render the whole pure water supply system unusable for several days.

The receiving of the water take-off profiles of respective ones of the take-off points may comprise, for example, receiving the water take-off profiles of the ones of the take-off points which are currently open at the time of performing the profile receiving step. This may allow predicting if an insufficient purified water supply event might happen in a future time period covered by the prediction under the assumption that only the currently closed take-off points are opened (and closed) in accordance with a schedule being indicative of the expected time periods when a take-off point will be opened and closed. For example, the schedule may be indicated in the respective profiles or in a configuration file or may be predicted by the controller separately. According to other embodiments, in the controller in addition receives the profiles of one or more of the currently closed ones of the take-off points, e.g. for predicting if an insufficient purified water supply event might happen in a future time period covered by the prediction under the assumption that one or more of the currently closed take-off points are opened (e.g. in accordance with the above-mentioned schedule or under the assumption that a take-off point is opened during the future time period although its opening time is not indicated in the schedule).

According to some embodiments, the prediction is performed also as a function of a schedule being indicative of the expected opening and closing times of one or more or all of the take-off points of the pure water supply system. The schedule may be, for example, be a configuration data structure, e.g. a configuration file, or may be the result of a separate prediction. For example the controller may be configured to predict the future open/closed state schedule by analyzing and finding open/closes state patterns in a database being indicative of open-closed states of the take-off points observed in the past.

According to some embodiments, the controller is configured to generate a GUI enabling a user to define a profile of a take-off point by displaying the purified water consumption rate of one or more of the take-off points observed in the past during an observation time interval; enabling a user to select via the GUI a sub-interval of the observation time interval, the sub- interval covering one or more time intervals wherein the take-off point was open and consumed water; and using, by the controller, the selected sub- interval and the observed purified water consumption rate of the said take-off point during the selected sub-interval as the profile of said take-off point.

According to other embodiments, the profile of a take-off point can be determined automatically. For example, a software program can analyze the purified water consumption rates of a particular take-off points observed during multiple observation time intervals in the past. The software program may determine an average purified water consumption rate to be expected for the particular take-off point during a particular time interval in the course of the day. For example, the software may determine that a particular take-off point has always been open weekdays between 11:00 and 11:25 and in addition on Thursdays between 15:00 and 15:12. As a consequence, the profile of this take-off point may cover a whole week and comprise zero peaks during the weekend, a single peak on Monday, Tuesday, Wednesday and Friday and two peaks for Thursday. In other embodiments, the observed water consumption rates of the one or more take-off points may be annotated with more complex metadata, e.g. the month and the year, environmental conditions like temperature or humidity, the identity of a human operator having authenticated at the controller, the open/closed state of other take-off points and the like. The analysis of the water consumption rates observed in the past and the respectively annotated metadata may allow the software to extract more complex profiles and/or a plurality of different profiles for the same take-off point. For example, there may be one profile for the water consumption rate on weekends, one profile for Thursday when operator A is logged in and another profile for Thursday when another operator B is logged in (who may manually close this take-off point) and a further profile for Monday, Tuesday, Wednesday and Friday when either user A or C is logged in. Preferably, the software for analyzing observed consumption profiles in the past for automatically extracting updated and/or additional profiles of the one or more take-off points may be executed in the background. This may ensure that the profiles are up-to-date and accurately reflect the real, typical purified water consumption profiles of the take-off points.

According to some embodiments, at least one of the profiles comprises two or more purified water consumption peaks of one of the take-off points.

This may have the advantage that in a single profile, a complex pattern of open-closed states of a take-off point can be covered. This may increase the accuracy of the prediction, in particular in situations where one or more take-off points are opened and closed multiple times in series over a first time period and are then continuously closed for a second time period, whereby the second time period is typically longer than the first time period.

The purified water distribution system can be, for example, a recirculation loop or an open loop. An "open loop" water distribution system is a distribution system configured to continuously drain a minimum amount of unused water per time to ensure a minimal flow rate and water purity is maintained. A "closed loop" water distribution system is a distribution system which does not continuously drain unused water but rather recycles the unused, pure water by causing it to flow back into the tank in a recirculation loop.

According to embodiments, the total capacity of the storage tank is smaller than the amount of purified water needed when all take-off points are open for at least a predefined period of time, e.g. the an hour or a day or the shortest manufacturing workflow executed at any one of the take-off points. In addition, or alternatively, the purification power of the water purification system is smaller than the purified water consumption rate of all take-off points when all take-off points are open.

As explained above, embodiments of the invention may have the advantage that a reliable, non-interrupted supply of purified water to at least some or the majority of the take-off points may be provided even in case the storage tank is not large enough and/or the purification power of the water purification system is not high enough to serve all take-off points of the system simultaneously. As the controller may fully automatically determine if there is or will be a shortage of purified water as a consequence of opening a further take-off point, it is not necessary that a human user performs error prone and time consuming safety routines before opening a take-off point to ensure no water shortage will occur while the take-off point is active/open.

According to some embodiments, the controller is configured to perform the prediction for multiple future moments in time, e.g. for a continuous future time span. For example, the controller may align and superimpose the profiles of all open and optionally also of one or more further, currently closed take-off points and determine whether the profile resulting by an addition of the water consumption of all superimposed profiles exceeds at any time the amount of purified water that can be provided by the tank and optionally also the water purification system. The alignment of the profiles may be performed such that the take-off point opening time within a profile is aligned with the opening time of the profile's take-off point observed in the pure water supply system.

According to embodiments, the prediction in addition uses the actual water production rate of the water purification system as input.

Entering the actual water production rate of the water purification system into the prediction may have the advantage that the accuracy of the prediction may be increased by computing the total purified water amount consumed by the take-off points as a function of at least the profiles of the take-off points and of the current purified water production rate. For example, the controller, considering only the consumption of at least the already open and optionally also one or more of the currently closed take-off points, and the current fill level of the storage tank, could predict that the tank will be empty in 30 minutes and then a water shortage will occur, since in 30 min some take-off points are predicted to still be open and require purified water. In this case, the controller would possibly stop the opening of the additional take-off point or prophylactically shut down another take-off point of lower priority. However, if the controller also takes into account the production rate of new purified water, in some cases the controller may allow the opening of additional take-off points because, taking into account the amount of purified water that the water purification system will supply in the future, certain shortages may not occur.

According to embodiments, the prediction is updated repeatedly.

For example, the repeated updating of the prediction can encompass repeating the prediction quasi continuously. For example, the prediction may be performed in an endless loop. According to some examples, the prediction may be updated (repeated based on updated parameter values, if available), at least once per hour, or at least once every 10 minutes, or at least once every 5 minutes, or at least once every minute, or at least multiple times per minute. Likewise, measured parameter values such as the current fill level of the storage tank, the open/closed state of the take-off points, the current purified water production rate of the water purification system and/or the current purified water consumption rate of each of the currently open take-off points may be measured automatically repeatedly, e.g. with the same or with a different frequency like the frequency of updating the prediction. The updated predictions will be automatically repeated based on the newly measured parameter values.

According to embodiments, the prediction is updated taking into consideration the actual takeoff rates of the currently open take-off points while assuming that the water take-off profiles are valid for the prediction.

This means that even if the actual and/or the past purified water consumption rate of a take-off point is not the same as indicated in the profile of this take-off point, the controller nevertheless uses the stored profile of this take-off point for computing the prediction.

This may have the advantage that the regulation of the system by the controller is reliably and reproducibly based on certain purified water consumption profiles of the take-off points and always orients the regulation of the water purification system according to these known "default" profiles. One-time malfunctions or a different use of a take-off point in an individual case, so that this take-off point, for example, operates longer or shorter or with a different water consumption rate than usual, thus do not lead to the controller adapting its regulation. This means that the controller does not adjust its regulation if a take-off point is used for a longer or shorter period of time or with a different water consumption rate than specified in the take-off point's profile. This embodiment may be particularly advantageous if most of the take-off points in the system are used in practice in the same or similar way as described in their profiles.

According to embodiments, the prediction comprises predicting if a sufficient water supply can be maintained when at least one further take-off point is opened, whereby the prediction takes into account in addition the water take-off profile of that at least one further take-off point.

Hence, according to embodiments, the prediction takes into consideration also the profiles of one or more currently closed (inactive) take-off points of the pure water supply system.

This may have the advantage of increasing the prediction accuracy, because the system may be able to support opening a still further take-off point having a low water consumption rate, but not a further open take-off point having a high water consumption rate. Likewise, the consumption rate of a further take-off point may be supportable if this take-off point has its consumption peak at a time when other take-off points will already have reduced water consumptions or will already be closed, but it may not be supportable if this take-off point has its consumption peak when also the water consumption of other take-off points peak. By taking into account the profile of the further take

According to embodiments, the prediction comprises:
- predicting, using the actual filling level and the profiles of the currently open take-off points, if a sufficient water supply can be maintained for the currently open take-off points;
- in response to determining that a sufficient water supply can be maintained for the currently open take-off points, predicting, using the actual filling level and the profiles of the currently open take-off points and the profiles of at least one further, currently closed one of the take-off points, if a sufficient water supply can be maintained for the currently open and the at least one further take-off points;
- in response to determining that a sufficient water supply cannot be maintained for the currently open take-off points, determining that the prediction indicates an un-sufficient water supply, and performing the at least one action. The profiles of the currently closed take-off points are not considered.

This may be advantageous because the computing time is shortened and thus the latency time within which the controller can recognize a possible shortage situation and react accordingly: if, for example, the prediction returns that a shortage situation will already occur on the basis of the profiles of the already open take-off points, further analysis of the profiles of the not yet open take-off points may be omitted, because the take-off points that are open now may already be causing a downregulation or shutdown of an open take-off point. If, however, according to the prediction, the currently open take-off points will have enough water for their operation according to their respective profiles, it may be useful to include the profiles of one or more of the currently closed take-off points in the prediction, e.g. in order to identify which take-off point could theoretically in addition be opened without a water shortage occurring, and which could not. In some embodiments, the result of the prediction are displayed to the user. If the controller then actually receives a request to open a specific take-off point that is currently closed, the controller can decide immediately and without executing an additional prediction whether the request to open the take-off point can be met or whether the request must be rejected. Since in this case a request to open another take-off point can be decided immediately and without new prediction by the controller, e.g. by the controller opening the take-off point or preventing the opening, latency times are further minimized.

According to embodiments, the use of the profiles for the predictions comprises determining, for one or more of the water take-off points, an observed opening time of the take-off point, aligning the opening time within the take-off point's profile with the observed opening time of the take-off point, and using the future part of the aligned profile to predict future water take-off rates specified in this profile between the current time and a future time, and using the determined remaining water take-off rates as the predicted future water take-off rates of this water take-off point.

For example, if a take-off point was opened at a time Tₒₚₑₙ three hours ahead of a current time (time of performing the prediction), the opening time within the take-off point's profile would be aligned with the observed opening time Tₒₚₑₙ; the controller would evaluate the future part of the profile (covering the time after the current time) to determine the flow rates and/or the total volume of the purified water to be consumed by the respective take-off point in the future.

For example, if the take-off point was opened 10 minutes ago and if the controller performs the prediction for a future point in time in one minute, the controller will read the profile of this take-off point, align the opening times, and determine the amount of purified water consumed by this take-off point according to the profile between minutes 10 and 11 after the opening time of the take-off point in the profile.

According to embodiments, the controller is configured to:
- receive actual water take-off amounts (volumes or rates) measured for each open take-off point over one or more observation time periods, and
- use the received, measured water take-off amounts for dynamically correcting the profiles of the take-off points such that deviations of the profiles from the received actual water take-off amounts measured during the observation time periods are reduced.

For example, if it is repeatedly determined for a particular take-off point that the actual amount of purified water consumed is three times higher than that specified in the profile, the controller may be configured to adjust the profile accordingly and triple the total amount of water consumed.

According to some examples, the controller may be configured to create and store in a database measured profiles of the actual purified water consumption of each of the take-off points. A measured profile may be obtained and stored whenever a take-off point is opened and used. The controller may then analyze the measured profiles of the take-off points stored in the database to calculate a new or additional profile that is used to calculate future predictions. For example, an average profile can be calculated from all or some of the measured purified water consumption profiles of a take-off point, and the average profile can then be used to calculate the predictions.

According to embodiments, the selected at least one action is configurable in by a user.

For example, the controller may be configured to generate a user interface, in particular a graphical user interface (GUI), which enables a user to modify a configuration which specifies the one or more actions to be performed in case the prediction returns that there will not be sufficient water (e.g. for all currently open take-off points or for all currently open and a further, currently still closed take-off point).

In some embodiments, the configuration may cause the controller to notify the user (e.g. via e-mail or via the user interface) that the at least one further take-off point cannot be opened, otherwise a water shortage will occur. The user can then decide for himself what should be done in the following. In other application scenarios, the configuration may cause the controller to automatically prevent the opening of the at least one additional take-off point, e.g. by the controller locking a valve leading to this take-off point in the "closed" state so that it cannot be opened. In other embodiments, the configuration can cause the controller to compare the priority of the at least one additional take-off point to be opened with the priorities of the other already opened take-off points, and automatically closes the take-off point with the lowest priority (if it is already open at the moment) or does not open it at all (if the take-off point with the lowest priority is the one that should actually be opened). The latter configuration can be useful, for example, if the system also supports processes that can be interrupted without great disadvantages. The system can thus react particularly flexibly to different needs by closing take-off points with low priority, if necessary, in order to allow take-off points with higher priority to start operating.

According to embodiments, the controller is configured to perform the at least one action such that a decision if and when the purified water production rate is increased is performed such that at least one optimization parameter is minimized or maximized.

According to embodiments, the at least one optimization parameter comprises the number status change events of one or more components of the water purification system between "switched-on" and "switched-off", wherein the prediction is performed such that the number of status change events is minimized.

This may be particularly advantageous for systems that contain components that wear out with frequent on and off switching, or that have significantly increased energy consumption during these state changes. For example, pumps often require a much larger amount of energy during startup than during operation. Some pump types and valve types wear particularly heavily when their state changes from active/open to inactive/closed or vice versa. In such systems, orchestrating the water production and the opening of the take-off points in such a way that these switching operations are minimized can thus help to extend the life of the system and/or its components and/or reduce the energy consumption during operation.

According to embodiments, the water purification system is a mechanical filtration based or reverse osmosis based purification system and wherein the components whose status change events are minimized are pumps.

As explained above, these type of systems may benefit from the controller described herein for embodiments of the invention, because the life expectancy of the water purification system or its components may be extended.

According to embodiments, the at least one optimization parameter comprises a target fill level of the storage tank, wherein the prediction is performed such that the target fill level is minimized.

This may have the advantage of reducing the risk of contamination. If only a small amount of water is kept in the tank, it is very likely that even if only a few take-off points are open, it will be completely used up very soon and will have to be replaced by newly produced, purified water. Thus, a comparatively small amount of water remains in the tank for a comparatively short time. This is beneficial because in the tank there is a particularly high risk of biofilm formation due to the lack of or low water movement.

According to embodiments, the storage tank comprises or is operably coupled to an anti-microbial sub-unit configured to treat the pure water in the storage tank such that the amount of microbes in the tank is reduced. For example, the anti-microbial sub-unit can be a heating element configured to heat the water in the tank, or a UV-light source configured to irradiate the water in the tank, or a water-ozonation system configure to introduce ozone into the water in the tank. The anti-microbial sub-unit may treat the water in the tank physically and/or chemically such that the number of bacteria and other microorganisms is reduced, thereby ensuring that the water remains pure also in case it is stored in the tank for multiple hours or days. The treatment may be performed continuously or repeatedly in time intervals.

A controller that manages the water purification system so that the tank has the lowest possible fill level that is just sufficient to meet current and predicted demand for the take-off points that are already open can also save energy. In some systems, one or more heating elements or other anti-microbial sub-units are included in or are operatively coupled to the tank that treat the water in the tank constantly or from time to time to kill any microorganisms it may contain, or at least to reduce their number. This process is very energy-intensive (e.g. for generating heat or UV-light). A controller that attempts to keep the water level as low as possible, namely just high enough to contain the predicted required amount of water, optionally supplemented by a predefined amount of water as a "safety buffer", has the advantage that the energy required to treat the water contained in the tank is also reduced. This may allow to operate the water purification system in a way that the risk of contamination is minimized and that energy consumption is minimized.

According to embodiments, the water purification system is selected from a group comprising:
- a Chlorination/Dechlorination system,
- a mechanical filtration system,
- an Ultraviolet Radiation system,
- an Ozonation system,
- a deionization system,
- a reverse osmosis system,
- a combination of one or more of the aforementioned water purification systems.

In a further aspect, the invention relates to a method for supplying multiple pure water take-off points with pure water as specified in claim 16. The method is implemented in a controller of a pure water supply system comprising the controller, a pure water storage tank, and a water purification system. The purified water is to be used for a manufacturing process. The method comprises:
- controlling the purified water production rate of the water purification system to provide a filling level of the pure water storage tank,
- controlling a supply pump to continuously pump purified water generated by the water purification system in a purified water distribution system such that a minimum flow rate of the purified water is maintained,
- receiving the actual filling level of the storage tank,
- receiving a water take-off profile of respective ones of the take-off points, wherein the take-off profiles are indicative of the purified water consumption rate of the respective take-off points observed in the past, wherein the profiles are defined by a user via a GUI by selecting sub-intervals of an observation time interval, the sub- interval covering one or more time intervals wherein one of the take-off points was open and consumed water, or wherein the profiles are determined automatically by a software program configured to analyze the observed purified water consumption rates of the take-off points during multiple observation time intervals in the past,
- predicting, using the actual filling level and the received profiles, if a sufficient water supply can be maintained,
- in response to the prediction indicating an un-sufficient water supply, performing at least one action of a group of actions comprising:
   o controlling the purified water production rate of the water purification system to increase the water production to prevent the predicted purified water shortage for the manufacturing process.

Optionally, the group of actions may in addition comprise:
- selecting at least one of the take-off points in accordance with predefined priorities being assigned to the take-off points and switching off or disabling switching on te selected at least one take-off point.

### Brief description of the drawings

In the following figures, these embodiments of the invention are explained in greater detail, by way of example only:
- Figure 1: illustrates a pure water distribution system;
- Figure 2: illustrates various steps and decision points of a control workflow executed by the controller of a pure water distribution system;
- Figure 3: a flow chart of a method for providing pure water to a plurality of take-off points;
- Figure 4: shows a plot comprising multiple take-off point profiles;
- Figure 5: shows a state profile of a pure water supply system operated by a controller not falling under the scope of this invention; and
- Figure 6: shows the state profile of the pure water supply system operated by a controller according to an embodiment of the invention.

### Detailed description

In the following description of aspects and embodiments of the present invention, the following terms shall have the following meanings.

A "heating element" as used herein is any kind of device adapted to heat the water comprised in the storage tank and may encompass also heat exchangers.

A "take-off point" as used herein is an object which receives and consumes purified water in an "open" or "active" state, and which can assume a "closed" or "inactive" state in which it does not consume purified water. For example, the object may be a line that can be automatically closed and opened by the controller, a machine for introducing a defined amount of purified water into a product or a production process or a synthesis process. The line controllable by the controller may additionally include a manually operable valve and be designed, for example, as a manually operable purified water tap.

A "water take-off profile" as used herein is a function which is indicative of the amount of water consumed by a water take-off point over the course of a time interval. For example, a water take-off profile may be a curve which indicates the flow rates of purified water provided to and/or consumed by the take-off point over the course of the time interval. According to another example, the water take-off profile may be a curve which indicates the total volume of purified water provided to and/or consumed by the take-off point over the course of the time interval. In the first example, the profile may indicate a purified water flow rate over the time e.g. in the form of "liter/hour" provided in the course of the time interval. In the second example, the profile may indicate a purified water volume over the time, e.g. in the form of "liter" provided in the course of the time interval. The time interval may cover, for example, at least one second, or at least one minute, or at least one hour, or at least one day, depending on the nature of the take-off points and the processes served by the take-of points.

The "water take-off profile" may also be referred to as "water consumption rate profile" or "profile" of a take-off point.

The switching on of a take-off point may also be referred to as "opening" or "activating" a take-off point.

The switching off of a take-off point may also be referred to as "closing" or "deactivating" a take-off point.

A "water purification system" as used herein is a system configured for removing undesirable objects or substances such as chemicals, biological contaminants, suspended solids, and/or gases from water. In particular, a water purification system may be a system which is capable to remove at least biological contaminants from the water. The goal is to produce water that is fit for specific purposes such as the synthesis of chemical products, the production of various goods, in particular pharmaceutical products or solutes for the use in a laboratory. In some embodiments, at least parts of the purified water may also be used for human consumption (drinking water), but typically a water purification system as used herein is used for providing purified water for medical, pharmacological, chemical, and industrial applications. A water purification system may make use of a wide variety of methods. The methods used include physical processes such as filtration, sedimentation, and distillation; biological processes such as slow sand filters or biologically active carbon; chemical processes such as flocculation and chlorination; and the use of electromagnetic radiation such as ultraviolet light. Water purification can reduce the concentration of particulate matter including suspended particles, parasites, bacteria, algae, viruses, and fungi as well as reduce the concentration of a range of dissolved and particulate matter.

According to some embodiments, the water purification system is a system making use of one or more of the following methods: Chlorination/ Dechlorination, Mechanical Filtration, Ultraviolet Radiation (UV), Ozonation, Deionisation (DI) and Reverse Osmosis (RO). RO systems use Reverse Osmosis (RO) membranes e.g. in single or double pass reverse osmosis configurations.

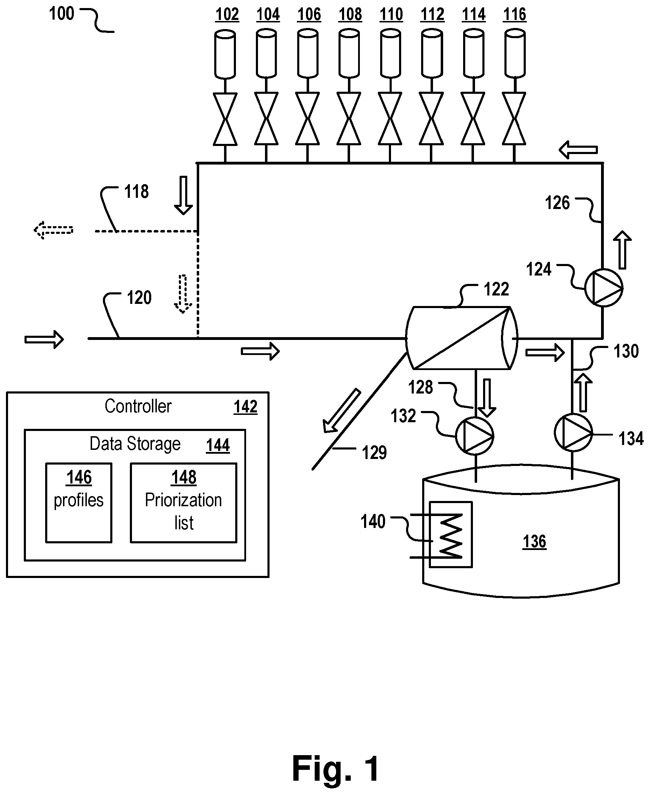

**Figure 1** illustrates a pure water supply system 100 according to one embodiment of the invention.

Feed water (often pre-treated mains pressure water) is fed via the feeder line 120 into the system. The water is transported via one or more pumps into the water purification system 122. For example, the water purification system can be a reverse-osmosis filter system or another type of water purification system.

According to one example implementation, there is a feed water flow into the reverse osmosis membrane assembly 122. The feed water passes along one side of the membrane until it meets a restriction on the outlet. The restriction causes a driving pressure that forces some of the feed water to pass through the membrane. Essentially the membrane characteristics allows only water to pass through the membrane, rejecting dissolved solids and large molecules including micro-organisms in the remaining water (reject water). The water allowed to pass through the reverse osmosis membrane is collected (product water) in the tank 136 and is forwarded from the tank 136 to the take-off points. The reject water is dumped or discarded via the RO-discard line 129 which may be absent in pure water supply systems using water purification systems of a different type. The product water is in a purified state according to the reverse osmosis membrane rejection characteristics whilst the rejected water contains the impurities (at a higher concentration compared to the original feed water). Impurity concentration in the reject stream is limited to prevent precipitation of dissolved solids and scaling of the membrane and a minimum cross-flow velocity is necessary to assist with self-cleaning of the membrane surface. These parameters may also be used and considered by the controller when controlling the flow rates and pressures generated by one or more pumps and valves within the pure water supply system 100.

The purified water is then stored in the purified water storage tank 136. For example, pump 132 and/or 134 may be used for transporting the purified water via the pipe 128 into the tank. When purified water is needed by one or more of the water take-off points 102-116, the purified water is transported from the tank 136 by one or more pumps 132, 134, 124 via the purified water distribution system 126 to the take-off points 102-116.

Purified water which has not been consumed by the take-off points will either be reintroduced into the water cycle (in the case of closed-loop system) or will be drained via the drainage line 118 (open loop system). Discarding unused purified water via pipe 118 allows to inhibit bio-film formation on internal hydraulic surfaces of the distribution system 126, because it ensures the purified water is continuously circulated at a minimum velocity, e.g. a velocities exceeding a minimum of 1 meter per second.

Optionally, the tank 136 may comprise one or more heating elements 140 for heating the water comprised in the tank to prevent biofilm formation. For example, the heating element 140 may heat the water in the tank to 80 degrees Celsius which is held for a minimum of 10 minutes. Equivalent anti-microbiological effectiveness have been observed for other temperatures and durations, for example 90 degrees Celsius for 1 minute or 70 degrees Celsius for 100 minutes. Ultimately the individual system disinfection temperature and hold duration is set according to the needs of the respective water purification system 100.

Each take-off point 102-116 can be connected to the purified water distribution system 126 via a valve (or another type of opening which can be reversibly opened and closed) which is controlled by a controller 142.

The controller can be, for example, a local or remote computer system, a monolithic computer system or a distributed computer system, e.g. a cloud computer system, or a component thereof. The controller may also be implemented on a single board computer or may be part of a process automation system, in particular a field-based process automation system. For example, the controller may comprise or be implemented as a programmable logic controller (PLC) or programmable controller, i.e., as a computer that has been ruggedized and adapted for the control of manufacturing processes, such as assembly lines, machines, robotic devices, or any activity that requires high reliability, ease of programming, and process fault diagnosis. PLCs can range from small modular devices with tens of inputs and outputs (I/O), in a housing integral with the processor, to large rack-mounted modular devices with thousands of I/O, and which are often networked to other PLC and SCADA systems.

In some implementation variants, the controller comprises one or more programs to control machine operations of various components of the system 100, e.g. the one or more pumps, the valves/openings of the take-off points, the water purification system and/or the heater. The one or more programs are typically stored in battery-backed-up or non-volatile memory and optionally also in non-volatile storage media.

According to examples, the controller is implemented as a hard real-time system, which means that output results are ensured to be produced in response to input conditions within a limited time.

The controller comprises a data storage 144 which comprises a plurality of "water take-off" profiles. Each profile is stored in association with an identifier of one of the take-off points and represents e.g. the volume or flow rate of purified water consumed by said one take-off point over a period of time (e.g. several hours, several days or several weeks, depending on the use case scenario). Optionally, the data storage 144 of the controller in addition comprises a priorization list 148 being indicative of the priority of the respective take-off point. In case an additional take-off point requests to switch to the "open" state, the periodization list 148 may be used by the controller to determine if the additional take-off point is more important than one or more of the already open take-off points and to orchestrate the switching on and switching off of the respective take-off points accordingly.

According to some embodiments, the controller is or comprises an application program, in particular an "operational historian" database application, developed for using operational process data for monitoring and controlling a pure water supply system. The application can be embedded or used in conjunction with standard DCS and PLC control systems. Raw data may be accessed, for example, via OPC HDA, SQL, or REST API interfaces.

According to implementation variants, the application is hosted in the infrastructure being local or remote to the pure water purification system and is used as "real-time system" or "near-real-time system". According to some embodiments, the application uses direct or indirect read and write access to the connected programmable logic controller (PLC), i.e., an industrial computer that has been ruggedized and adapted for the control of a pure water supply system and/or of components of this system.

Pure water supply systems as depicted in figure 1 may be used for a variety of purposes in pharmaceutical manufacturing. Purified water may be used in product formulation and final washing of process equipment and containers. To produce purified water, the water purification system may be configured to remove organic substances, ions and bacteria /viruses to a level that meet the respective safety requirements, e.g. Eur.Ph, USP or JP requirements. The process of purifying water may comprise multiple steps and corresponding purification sub-systems. For example, the water purification system can comprise a combination, e.g. a cascade of a RO-based water purification system, a Ion Exchange Deionisation/Demineralisation (DI) an Electro Deionisation (EDI/CEDI) system and/or a UV light treatment system depending on the purity grade required.

The system 100 shown in figure 1 for providing purified water to a plurality of take-off points is only one of many possible embodiments. For example, the water piping system may have additional subcircuits, there may be fewer or more pumps for delivering the water than shown in figure 1, and/or the pumps may be located at other positions within the piping system. There may be additional tanks and/or water purification modules in the system, which are then preferably taken into account by the controller in predicting possible future shortages of purified water. For example, in some embodiments, the purified water generated by the system 122 may also, at least partially, be transported directly to the water take-off points 102-116 instead of being stored in the tank.

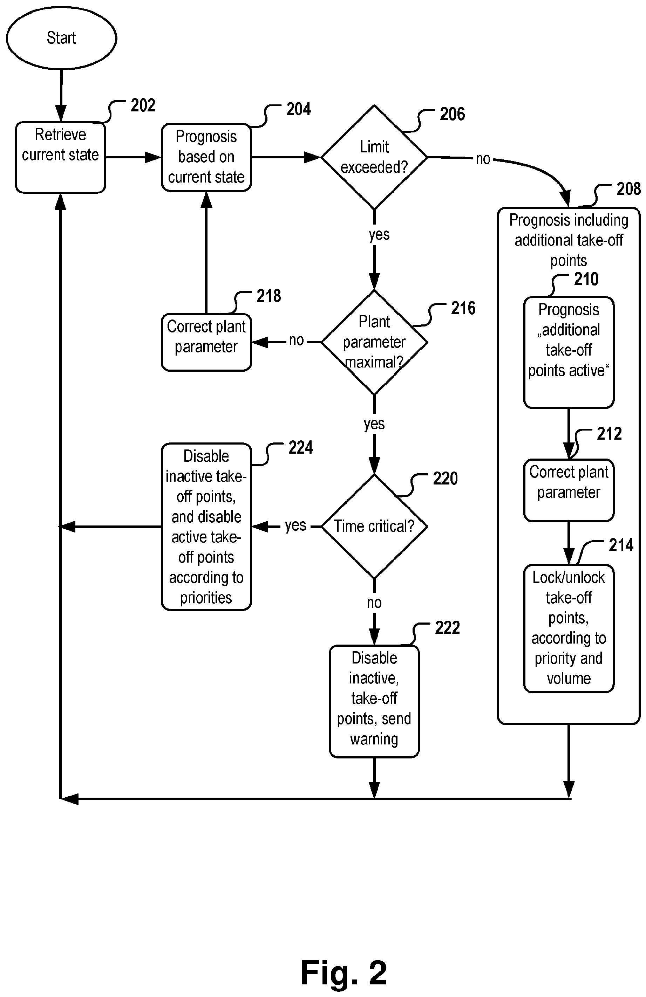

**Figure 2** illustrates various steps and decision points of a control workflow executed by the controller of a pure water supply system according to some embodiments.

In the method described herein, in step 202, the controller first receives data regarding the current status of all water take-off points of the pure water supply system. The status data includes at least information about whether a take-off point is currently open or closed. At least for the take-off points that are currently open, and preferably also for the take-off points that are closed, the controller receives one or more profiles. For example, in step 202, the controller may first receive from the respective take-off point or from a status database the current open/closed state of each take-off points along with a take-off point-ID. Using the take-off point-ID, the controller then accesses a database of profiles in which the profiles of the take-off points are stored in association with an ID of the respective take-off points.

In the next step 204, the controller calculates a prediction regarding the total consumption of purified water by all currently opened take-off points using the profiles of these opened take-off points as input. For example, the controller may superimpose the purified water profiles starting from the time of performing to the prediction to at least the future point in time so that the overall curve or profile generated by superimposing the different profiles calculates the predicted total purified water consumption of all currently opened take-off points for the said future time. Depending on the time periods covered by each of the overlaid profiles, the prediction may cover multiple seconds, preferably multiple minutes, and in some cases multiple hours.

In step 206, the controller performs a check to determine whether a predefined purified water consumption threshold is exceeded by the predicted total consumption of all currently open take-off points at the future point in time. For example, the prediction may refer to a future point in time (with respect to when the prediction is performed), such as a point in less than a second, or a point in time between one and a few seconds, a point in time between one and several minutes, or a point in time between 60 minutes and several hours. It is also possible that predictions regarding multiple future points in time are calculated, each comparing the same or different thresholds to the total purified water consumption predicted for that future point in time.

According to some implementation variants, the purified water consumption threshold is identical to the amount of purified water in the water tank at the time of prediction. According to other implementation variants, the purified water consumption threshold is identical to the sum of the amount of water that is in the water tank at the time of prediction and the amount of additional purified water that can be produced by the water purification system until the future time is reached (at maximum purified water production rate or at the currently measured purified water production rate). According to further implementation variants, the purified water consumption threshold is only a fraction of the aforementioned purified water consumption threshold, for example a value between 70% and 99% of the aforementioned purified water consumption thresholds, in particular between 80% and 90% of the aforementioned purified water consumption thresholds. This has the advantage that a certain safety buffer is included in the prediction to cover the case that a take-off point uses more water than would be expected according to its profile.

If the controller predicts in step 206 that the total consumption of purified water will exceed the predefined purified water consumption threshold at the future time, the controller checks in step 216 whether the water purification system is operating at maximum capacity. If not, in step 218, the controller regulates the water purification system to produce the maximum possible amount of water per unit time.

After upregulating the water purification system to the maximum possible output, the controller repeats step 204, i.e., predicts whether the currently open take-off points will consume more water by said point in the future than can be provided by the system (by means of the purified water storage tank and by means of the ramped-up water purification system) up to that point.

If the result of the check in step 216 as to whether the water purification system is already operating at maximum capacity indicates that this is the case, the controller performs a further checking step in step 220. In this step, the controller determines whether in the very short term, for example within less than 5 minutes, possibly less than 1 minute, possibly less than 1 second, the occurrence of a shortage is to be expected that is so great that one of the open take-off points can no longer supply its process with a sufficient quantity of purified water. Thus, in step 220, it is determined whether a water shortage will occur or is likely to occur immediately at one or more of the currently open take-off points. Immediate here may mean that the time until the predicted occurrence of the shortage is certain or has some predefined probability of being insufficient for a person to manually intervene to prevent the water shortage. Depending on the type and implementation of the system, the time threshold for the remaining time until the predicted shortage occurs, which determines if a predicted future water shortage is "time critical" or not, may vary. Preferably, a user may specify the time threshold in a configuration of the controller, wherein the controller considers a predicted water shortage to be time critical if the duration until the water shortage occurs is shorter than the specified time threshold.

Thus, if in step 220 the controller detects that a water shortage is imminent, the controller disables all currently closed take-off points so that they cannot be opened by other processes or by users. In addition, the controller causes one or more currently open take-off points to be closed. For this purpose, the controller analyzes metadata that is stored in the database linked to the ID of the currently open take-off points. The metadata contains information about the priority of the take-off points. For example, take-off points serving processes with water whose termination would lead to particularly large technical and/or economic damage may have a higher priority than take-off points serving processes whose termination would be less expensive and/or technically disadvantageous. Preferably, in step 224, the one or more take-off points are closed in accordance with their order of priority, with those take-off points having the lowest priority being closed first. Preferably, in step 224, only one take-off point, the one with the lowest priority, is closed, and steps 202, and 204 are repeated to predict whether, thanks to the closure of the take-off point with the lowest priority, the expected total water consumption is now expected to be sufficient to provide sufficient water at the future time to all remaining take-off points that are still open.

According to some embodiments, the closing of take-of points as a function of their respectively assigned priorities to prevent an insufficient supply of purified water comprises identifying the ones of the take-off points whose closure would prevent the insufficient water supply and whose closure would in addition amount to the minimum total aggregated costs.

For example, the priority of a take-off point may be indicative of and negatively correlate with the degree of damage caused by closing the take-off point (e.g. during an ongoing production). For example, the take-off point P1 may have a priority of 2 (closure cost of 2) and a water-consumption rate in open state of 1 I/min. Take-off point P2 may have a priority of 2 (closure cost of 2) and a water-consumption rate in open state of 2 I/min. Take-off point P3 may have a priority of 1 (closure cost of 3) and a water-consumption rate in open state of 3 I/min. Additional take-off points P4-P9 respectively having a priority of 0 (highest priority, e.g. a closing cost of 4) and a water consumption rate of 2 I/min may also be currently open. When the controller predicts a future water-shortage under the assumption that all said take-off points are maintained open, and when the controller predicts that a reduction of the consumption by 3l/min would prevent this water shortage, the controller may have the option to either close P1 and P2 or to close only P3 or to close both P1 and P4 (or P5-P9) in order to reduce water consumption by 3l/min. In view of the priorities (indicating costs), the controller will identify and close only P3 based on the assigned priorities and water consumption rates. This is because the priority of represents costs of "3", while a closure of P1 and P2 would have aggregated costs of "4", and a closure of P1 and P4 would have aggregated closing costs of 2 + 4=6. Hence, the closing of only P3 achieves to save 3l/min with minimum costs.

However, if the test step 220 determines that the water shortage predicted for the future time is not time-critical, for example because there is still enough time remaining for a human or other entity to take appropriate countermeasures, the controller in step 222 simply ensures that none of the currently closed take-off points can be opened by a user or other entity. There is no active closing of an already opened take-off point by the controller. However, the controller sends a message with a warning to a user to enable the user to manually take appropriate action. For example, a warning message can be issued via a GUI, and/or the controller generates an acoustic warning message or an alarm sound.

If the check in section 206 shows that the total water consumption predicted up to the future time for all currently open take-off points does not exceed the predefined purified water consumption threshold, the controller performs an even more comprehensive prediction of the (theoretical) total purified water consumption up to the future time in step 208. This comprehensive prediction in step 208 is about simulating the total purified water consumption for a hypothetical scenario in which at least one of the currently closed take-off points is also open. For example, in step 210, the controller calculates the total purified water consumption expected up to the future time assuming one of the currently closed take-off points is open now (i.e., at the time the prediction in step 208 is performed). This calculation may be performed for each of the currently closed take-off points. In some embodiments, the calculations step 210 may also be performed for combinations of two or more of the currently closed take-off points, such that a simulation is performed based on the assumption that said two or more currently closed loads would be opened now (at the moment of performing the prediction in step 210).

Further checking steps are then performed, corresponding to test steps 216 and not shown here. Here, it is determined whether, in said simulated scenario, the total purified water consumption predicted on the basis of the respective take-off point profiles exceeds the purified water threshold value, and if so, and if the water purification system is currently not yet operating at maximum capacity, a corresponding upregulation of the water purification system to maximum power would ensure that all take-off points considered as "opened" in the simulation can be sufficiently supplied with purified water by said time in the future. If the supply is not possible and the water purification system is not yet operating at maximum capacity, the controller ramps up the water purification system in step 212. For example, in step 212, the controller allows the water purification system to operate at maximum capacity. This ensures that the user or system operator has the option of opening at least one or possibly more currently closed take-off points (depending on which and how many currently closed take-off points were considered as "opened" in the simulation) without the immediate threat of a water shortage.

According to the described control workflow, it is not necessary that a predefined additional buffer of water has to be present in the tank at all times. Rather, the controller determines dynamically if the water purification system must be ramped up or not to ensure all currently open and in addition also one or more additional, currently closed take-off points can be reliably supplied with water. This may ensure that the water purification system does not produce much more water than actually needed, while at the same time ensuring a reliable, stable supply of purified water to the open and also one or more closed take-off points. In case a user opens an additional take-off point, the whole process depicted in figure 2 may restart automatically based on the profiles of all currently open take-off points, including the one which was just opened by the user.

Preferably, in step 214, the controller ensures that some of the currently closed take-off points remain closed, while others are allowed to be opened. Preferably, the decision as to which take-off point is operated so that a user or other entity can open in if necessary, and which take-off point is operated so that it cannot, is made according to the priority of the currently closed take-off points, whereby only those currently closed take-off points are operated as "openable" whose opening would not result in a water shortage according to the results of the simulation in step 210-212 . Preferably, the controller first enables opening of those take-off points that have a higher priority than the others.

The simulation of the purified water consumption under the assumption that at least one further one of the currently closed take-off points is opened as described for steps 208, 212, 214 may be optional and may not be carried out in some implementation variants.

Overall, the method described herein for monitoring and controlling the operating status of the various take-off points ("open", "closed and not openable", "closed and openable") according to some implementation variants ensures that sufficient water is always available, at least for the processes or take-off points with the highest priority. A forced interruption of a process due to water shortage will therefore certainly not occur, at least for the highest priority processes. The controller dynamically detects if a water shortage may occur in the future and automatically reacts in time-critical cases by closing some less critical processes and take-off points, and in less time-critical cases by warning a user accordingly. In any case, the opening of further take-off points is prevented in case of a predicted possible water shortage. At the same time, within the current performance limits of the system (i.e., in particular with respect to the current fill level of the tank and the performance of the water purification system), the controller continuously attempts to determine, through appropriate simulations in step 208, whether the water purification system can provide a sufficient amount of water for one or more additional take-off points and corresponding processes. Here, too, the priority of the respective - at the time closed - take-off points can be taken into account.

The goal of the simulation in step 208 is to determine whether the system is capable of providing sufficient water for at least the most important take-off points, should they be activated/opened, without risking a water shortage for the take-off points that are already open. If this is possible, the controller sets the state of this prioritization, currently closed take-off points to "closed, openable", the remaining closed take-off points remaining state "closed not openable".

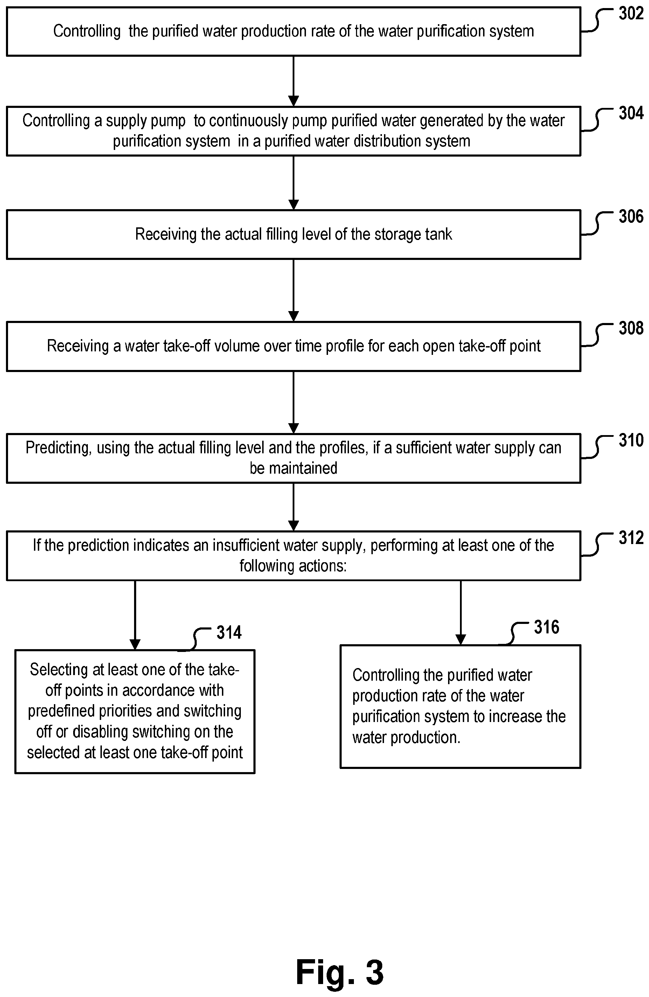

**Figure 3** shows a flow chart of a method for providing pure water to a plurality of take-off points. For example, the method can be executed by a system described with reference to figure 1.

During the ongoing operation of the pure water supply system, the controller ensures that water is replied reliably to all or at least the most important take-off points of the system.

In step 302, the controller controls the purified water production rate of the water purification system to provide a filling level of the pure water storage tank. For example, the controller may be pre-configured to fill the tank to a desired fill level, e.g. a value within one of the following ranges: 50% to < 60% or 60 % to < 70% or 70% to < 80% or 80% to < 90% or 90% to 100% of the total capacity of the tank.

In step 304 which may be executed in parallel to step 302, the controller controls the supply pump to continuously pump purified water generated by the water purification system in the purified water distribution system 126 such that a minimum flow rate of the purified water is maintained. The minimum flow rate may prevent biofilm formation. The pumps may comprise a plurality of pumps upstream and/or downstream of the water purification system.

The following steps 306-316 may be performed repeatedly, e.g. at least once per second, or at least once per minute, or at least once per hour.

In step 306 the controller receives the actual filling level of the storage tank. For example, the filling level may be measured via mechanical level measurement techniques, via conductivity measurement, via capacitive measurement, via optical measurement, via ultrasonic waves, via microwaves, or via radar measurements, e.g. guided radar.

In step 308, the controller receives a water take-off profile for each open take-off point. For example, the controller may read these profiles from a database, e.g. a relational database. In some implementation variants, the database may comprise multiple profile for one or more of the take-off points. For example, one profile could be the profile of a water take-off point in normal/default operation mode, and another profile could be the profile of this water take-off point in a maintenance operation mode. In case a water take-off point is used for providing purified water at different flow rates to different processes, e.g. at a flow rate F1 for a chemical synthesis S1 and a flow rate F2 for a different chemical synthesis F2, then the controller may be configured to receive an indication which type of process or synthesis is or will be served by a water take-off point and to read the profile which represents the flow rate needed for the indicated process or synthesis. Thereby, the flexibility of the system and the accuracy of the prediction may be increased.

Next in step 310 the controller predicts if a sufficient water supply can be maintained. In some embodiment, the prediction if a sufficient water supply can be maintained at one or more future moments in time may be performed solely for the currently open take-off points. In other embodiments and/or use-case scenarios, the prediction is performed for all currently open take-off points and for one or more further, currently closed take-off points. For example, the prediction may assume that the one or more take-off points are opened at the moment of performing the prediction, thereby "simulating" a situation in which the currently open and the one or more further, currently closed take-off points are open.

For performing the prediction, the controller uses at least the following data as input: the actual filling level of the purified water storage tank, the profiles of the currently open take-off points and, in case the opening of the one or more further take-off points is also to be considered/simulated, the profile of the one or more further take-off points. According to some implementation variants, also the current rate of purified water production and/or the maximum possible purified water production rate of the water purification system is used as input for performing the prediction.

For example, the controller may superimpose all profiles of the currently open take-off point and optionally also of the at least one further take-off point for obtaining a predicted profile of the total volume of purified water which needs to be delivered to the said take-off points over a period of time. For example, each of the profiles may cover a predefined time interval, e.g. multiple minutes or multiple hours. The controller may comprise or be operatively coupled to a plurality of water take-off point-specific times. When a water take-off point opens, the timer of this point determines the opening time and transfers the opening time and a take-off point-ID to the controller. Likewise, the timer sends the closing time to the controller when a take-off point is closed.

At each prediction, the controller determines the time which has already lapsed since a particular take-off point was opened. The controller then determines the point in time within the take-off point's profile which reflects the already lapsed time since the take-off point was opened. The profiles of the above-mentioned already open take-off points are aligned at moments in time within each of their respective profiles which reflect the already lapsed time since the take-off points have been opened. The profile of the above-mentioned at least one further take-off point which shall be opened is aligned with the start (t=0) of said profile.

Next in step 312 the controller determines that an un-sufficient water supply is predicted. In this case, the controller performs the action 314 and/or the action 316 described below. In addition, the controller may optionally generate a signal, e.g. a message to be displayed on a screen or an acoustic warning message. The signal indicates the prediction result, i.e., if the water supply is or is not sufficient to serve all currently open and/or one or more further, currently closed, take-off points at one or more future moments in time.

In case a future water shortage is predicted, the controller selects in step 314 at least one of the take-off points in accordance with predefined priorities assigned to the takeoff points and switches off or disables switching on the selected at least one take-off point.

In addition, or alternatively, the controller controls in step 316 the purified water production rate of the water purification system to increase the water production.

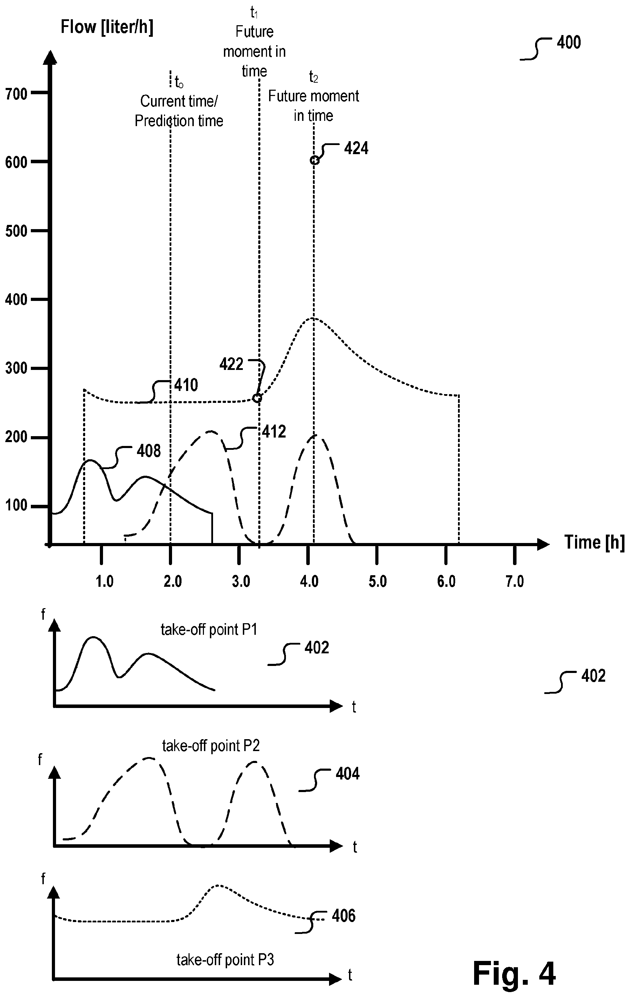

**Figure 4** shows a plot 400 comprising multiple take-off point profiles. For example, a first take-off point P1 may have a water take-off profile 402 comprising two peaks. A second take-off point P2 may have a water take-off profile 404 comprising also two peaks, but at different positions and with different amplitudes. A third take-off point P2 may have a water take-off profile 406 with a single peak and a comparatively high and largely constant "base" consumption rate. The time spans covered by the different profiles 402-406 may be identical or may be different.

In order to perform a prediction at a current time t₀ for the amount of purified water which will be consumed in the future, e.g. at a future point in time t₁ and/or a future point in time t₂, the controller determines the time span which has lapsed since each of the currently open take-off points was opened. In the depicted example, P1 was opened already at time t=0 (system start), P2 was opened at about 1 h 20 min and P3 was opened at about 0 h 40 min. The profiles 402-406 of the respective take-off points P1-P3 are aligned in the plot 400 at the starting time of each profile is identical to the opening time of the respective take-off time. By superimposing all the profiles of the currently open take-off points P1-P3 and of a profile of at least one currently closed take-off point assumed to open at current time/prediction time t₀ (not shown), the total required purified water supply rate (total purified water flow rate) and/or the total future purified water consumption (volume and/or rate) of the already open take-off points at a future moment in time can be predicted. The question if the available amount of purified water would support the opening of the at least one further take-off point can also be predicted. For example, at a future time t₁, the flow rate of purified water required is solely determined by P3, because P1 has meanwhile closed or at least stopped consuming purified water and because P2 is currently at its minimum and does also not consume water. At the future point in time t₂, the required purified water supply rate is computed as the sum of the rate of P2 (about 200 liters per hour) and of P3 (about 400 liters per hour), i.e., about 600 liters per hour.

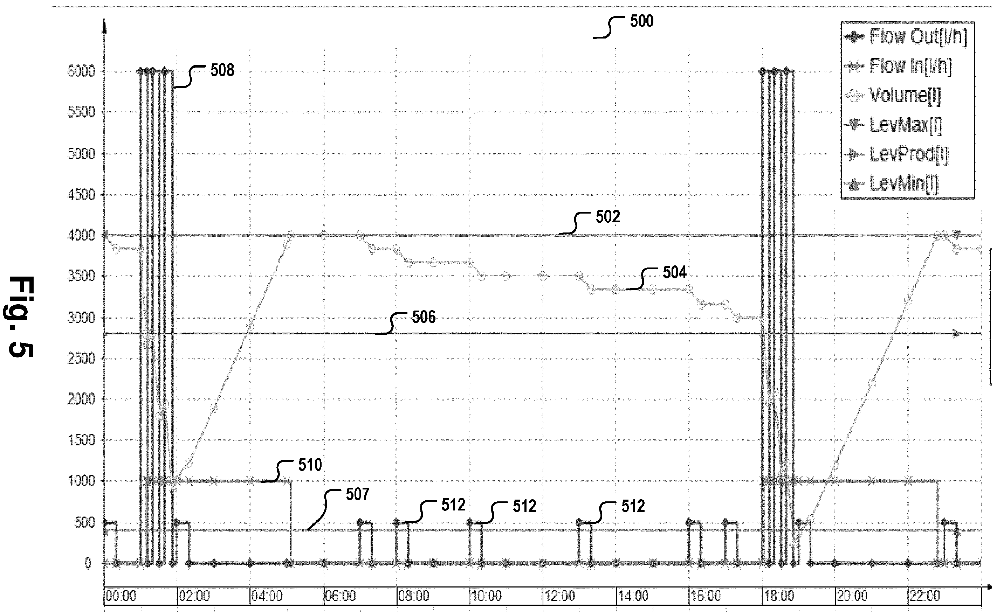

**Figure 5** shows a plot 500 providing an overview of the states of a pure water supply system operated by a controller which does not fall under the scope of this invention, because this controller is configured to start the water purification system only in response to determining that the fill level of the tank falls below a predefined fill level threshold. The plot illustrates various system parameters observed over the curse of a single day starting from 0:00 to 24:00.

The plot comprises a curve 504 being indicative of the measured fill level of the purified water storage tank. For example, at 05:00, the tank is filled to its capacity and comprises 4000 liter. The fill level continuously declines till about 19:00 when the water purification system is started. The tank is continuously refilled with purified water until about 23:00 when the tank again is completely filled.

The rate of purified water generated by the water purification system is indicated by the curve 510 "Flow In" and is given in liter per hour. When the water purification system of the depicted embodiment is active, it produces 1000 liter of purified water per hour. This water is at least partially fed into the storage tank.

The plot comprises a first threshold 502 being indicative of a maximum fill level of the storage tank. In the depicted example, the threshold 502 may be identical to the maximum physical storage capacity of the storage tank, but it is possible to set a lower level, e.g. less than 90%, or less than 80%, or less than 70%, or less than 60%, or less than 50% of the maximum physical capacity of the storage tank. When the fill level is observed to have reached the threshold 502, the controller causes the water purification system to stop generating purified water.

The plot comprises a second threshold 507 being indicative of an insufficient water supply event. For example, the threshold 507 can be a value between 0% and 10% of the storage tank capacity, e.g. 10%=400 liter in the depicted embodiment. According to other examples, the threshold may be a value smaller than 20% or smaller than 30% of the total capacity of the storage tank. The fill level of the storage tank should not be lower than the minimum fill level of the storage tank. When the fill level of the tank falls below threshold 507, this event is considered as an insufficient water supply event, because already small fluctuations in the water consumption of one of the take-off points may result in an insufficient supply of this or other take-off points.

The plot further comprises a third level 506 being indicative of a "production-on" threshold. According to the depicted example, the controller is configured to cause the water purification system to start generating purified water immediately in response to determining that the fill level of the tank has fallen below the threshold 506. For example, the threshold 506 can be a predefined fraction of the storage tank capacity, e.g. 70%=2800 liter in the depicted example. According to other examples, the threshold may be a different value, e.g. a value of 80% or 90%.

For example, at about 05:00, the controller determines that the fill level of the tank has reached the threshold 502 and as a consequence stops the water purification system (the Flow In rate falls to zero at about 05:00). When the controller determines that at about 18:00 the fill level falls below the threshold 506, the water purification system is re-started, until it is stopped at about 23:00.

The curve 508 illustrates repeated opening and closing of multiple take-off points having a high purified water consumption rate of about 6000 liters per hour between 01:00 and 02:00. Although the take-off point is not continuously open, the fill level of the tank is observed to rapidly decline during this time period due to the high water consumption rate. In the time interval between 01:00 and 03:00, the controller manages to keep the fill level of the tank above the critical level 507 by activating the water purification system (see curve 510 during 01:00 and 05:00).

The same series of open-closed states of the take-off point is also scheduled in a time interval between 18:00 to 19:00. In this time interval, the controller reacts as described before, meaning that the controller activates the water purification system at about 18:00 in response to determining that the fill level of the tank has fallen below threshold 506. However, in this case the controller was not able to prevent an insufficient water supply, because the activated water purification system is not able to sufficiently compensate the high consumption rate. As a consequence, the fill level at about 18:52 falls below the minimum level 507. The controller therefore disables a take-off point, e.g. POU6, until the tank level has recovered again. The closing of the take-off point may result in significant economic damage, such as the need to destroy entire production batches of drugs or other substances and the need to clean the pure water supply system for several days.

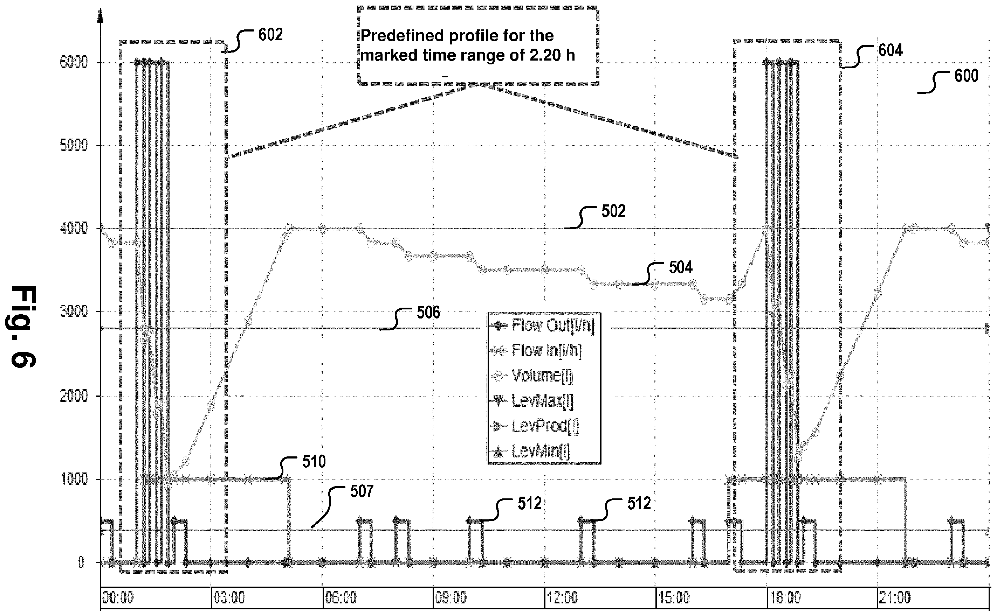

**Figure 6** shows plot6 providing an overview of the states of a pure water supply system operated by a controller implemented according to embodiments of this invention.

The thresholds and curves depicted in plot 600 have the same meaning as described already with reference to figure 5. The main difference is that the controller who operates the pure water supply system whose state profile is depicted in figure 6 does not react in response to a measured fill level falling below a threshold, but rather in response to predicting that an insufficient water supply will happen in the future. This may prevent insufficient water supply events, as observed an described with reference to figure 5, from the beginning.

According to one embodiment, the controller is configured to perform the prediction for a pure water supply system comprising the following 8 take-off points POU 1 to POU 8:

| **Take-off point ID** | **Take-off point Location** | **Consumption [I]** | **Flow [I/h]** | **Duration [min]** | **Profile** |
|---|---|---|---|---|---|
| **POU 1:** | Wash Area 1 | 167 | 500 | 20 | C://[...]/profiles/pou-01 |
| **POU 2:** | Coater Room 1 | 1200 | 6000 | 12 | C://[...]/profiles/pou-02 |
| **POU 3:** | Wash Area 2 | 167 | 500 | 20 | C://[...]/profiles/pou-03 |
| **POU 4:** | Coater Room 2 | 1200 | 6000 | 12 | C://[...]/profiles/pou-04 |
| **POU 5:** | Wash Area 3 | 167 | 500 | 20 | C://[...]/profiles/pou-05 |
| **POU 6:** | Coater Room 3 | 1200 | 6000 | 12 | C://[...]/profiles/pou-06 |
| **POU 7:** | Wash Area 4 | 167 | - | 20 | C://[...]/profiles/pou-07 |
| **POU 8:** | Coater Room 4 | 1200 | - | 12 | C://[...]/profiles/pou-08 |

For each of the take-off points, the controller may receive one or more water consumption profiles. Preferably, the controller also receives an indication of the time and duration when each of the controllers will likely be in open state. For example, this indication may be received in the form of a schedule or operation plan. In addition, or alternatively, the controller may be configured to perform a prediction when and how long the individual take-off points will be open. For example, the prediction may be based on a pattern-recognition algorithm configured to analyze log files being indicative of the open/closed states of the take-off points observed in the past. The controller may read the threshold 507 and optionally also thresholds 502 and 506 from a configuration, e.g. a file or a database.

In the depicted example, the take-off points POU1-6 have a constant flow-rate of the consumed purified water specified in their profiles. This means that the take-off points will have a constant water consumption rate while they are opened. The take-off points POU 7 and 8 may have a more complex profile with a variable water consumption rate as described, for example, with reference to figure 4. More complex water consumption rates may be specified e.g. in the form of an equation, e.g., a polynomial equation or a curve, which may be provided in a respective file whose storage address is given in the right column of the above table. The controller may be configured to read the profiles comprising a specification of an opening time and of a constant or variable water consumption rate while they are open from a storage space, e.g. from a database or file directory as indicated in the table above. In addition, the controller may configured to read a schedule or metadata comprised in the profiles which indicate when during the course of a day, a week or a month any one of the take-off points will be opened and for how long. The information comprised in these profiles and in the schedule may be used by the controller for predicting the identity of the opened take-off points, their opening and closing times and their respective purified water consumption rates while they are open.

According to some embodiment, the pure water supply system comprises a schedule, i.e., a configuration which specifies the opening and closing times of the take-off points. The controller is configured for reading and evaluating the configuration for predicting the opening and closing times of the take-off points of the pure water supply system. For example, the configuration may comprise the opening and closing times of the water take-off points POU-1 to POU7 given below:

| | 00:00 | 01:00 | 02:00 | 03:00 | 04:00 | 05:00 | 06:00 | 07:00 | 08:00 | 09:00 | 10:00 | 11:00 |
|---|---|---|---|---|---|---|---|---|---|---|---|---|
| **POU 1:** | | | | | | | | 07:00 | | | | |
| **POU 2:** | | 01:00 | | | | | | | | | | |
| **POU 3:** | 00:00 | | | | | | | | 08:00 | | | |
| **POU 4:** | | 01:20 | | | | | | | | | | |
| **POU 5:** | | | 02:00 | | | | | | | | 10:00 | |
| **POU 6:** | | 01:40 | | | | | | | | | | |

| | 12:00 | 13:00 | 14:00 | 15:00 | 16:00 | 17:00 | 18:00 | 19:00 | 20:00 | 21:00 | 22:00 | 23:00 |
|---|---|---|---|---|---|---|---|---|---|---|---|---|
| **POU 1:** | | | | | 16:00 | | | | | | | 23:00 |
| **POU 2:** | | | | | | | 18:00 | | | | | |
| **POU 3:** | | | | | | 17:00 | | | | | | |
| **POU 4:** | | | | | | | 18:20 | | | | | |
| **POU 5:** | | 13:00 | | | | | | 19:00 | | | | |
| **POU 6:** | | | | | | | 18:40 | | | | | |

In the following, the operation of a pure water supply system under the control of a controller according to embodiments of the invention will be described.

As explained already with respect to figure 5, also plot 600 illustrates various system parameters observed over the curse of a single day starting from 0:00 to 24:00.

The profile-based prediction of a future insufficient water supply may be performed continuously throughout the day, e.g. at least once in an hour, or at least once every minute, or at least once every second, starting e.g. at 0:00. Thereby, the identity of the currently opened take-off points and/or an actually measured purified water consumption rate may be determined empirically (e.g. by receiving respective switch-on signals and water-flow rates from the respective take-off points) and may be used for computed refined versions of the predictions.

The number an nature of the take-off points which will be open and will consume purified water may be derived from the schedule given above. The schedule may specify typical opening times, but the system is flexible and allows for the opening of additional take-off points or the opening of take-off points at times when this take-off point is typically closed. Hence, the schedule may alone or in combination with additional data, e.g. historic usage data, be the basis for predicting, by the controller, which ones of the take-off points will be opened in the course of the day and when. The controller may be able to receive and evaluate a configuration comprising an indication of the identity and time of opening or closing one or more of the take-off points. In addition, or alternatively, the module may comprise a rules engine or a machine-learning model for predicting which ones of the currently closed take-off points will likely be opened in the future, e.g., within the next 24 hours, and when. This information may be used for retrieving the purified water consumption profiles of the respective, currently open take-off points and super-positioning the profiles on top of each other.

The controller may predict that shortly after the opening the take-off point at about 01:00, the fill level of the tank will drop below the threshold 506. The controller further predicts that switches on the water purification system at about 01:00 will be sufficient to prevent an insufficient water supply event (the tank fill level falling below threshold 507), because the tank is almost full when PO06 is opened multiple times between 01:00 and 02:00. The purified water generated by the water purification system is indicated by the curve 510 "Flow In" and is at least partially fed into the storage tank, with the consequence that the fill level of the tank raises between 02:00 till about 05:00 until the level reaches or exceeds the threshold 502. In praxis, the effect of the control exerted by the different controllers described with reference to figures 5 and 6 is not visible here, because both controllers are able to prevent a water shortage in the time period between 01:00 and 03:00.

However, the situation is different for a further series of take-off point opening events in the evening. The controller may predict that between 07.00 and 18:00, another take-off point having a much smaller purified water consumption rate of only about 500 liters per hour will be opened and closed multiple times for about 30 minutes respectively. For example, this other take-off point may be opened at 7:00 and at 08:00 and at 10:00 and at 13:00 and at 16:00 and at 17:00 and is respectively closed 30 minutes later. Whenever this further take-off point opens (and the water purification system cannot compensate for the consumed amount of water), the fill-level of the tank decreases, as indicated in curve 504 between 06:00 and 18:00.

In the depicted example, the controller may predict already at 00:00 and at every following repeat of the prediction that at 18:52, the total purified water consumption of all take-off points opened and possibly closed again between 00:00 and 18:52 will result in the tank fill level dropping to 230 liter by 18:52. As this fill level is below threshold 507, this fill level is considered to be an indication of an insufficient water supply event. As a consequence, the controller may cause the water purification system to start operating already at 17:00 to prevent the occurrence of a water shortage from the beginning.

In contrast to the example depicted in figure 5, the controller is able to anticipate that the water purification system must start much earlier than at 18:00 (when the observed fill level falls below threshold 506) in order to prevent a water shortage event. The controller, configured to compute the prediction of a future water shortage as a function of the profiles of the one or more take-off points, the purified water production rate of the water purification system and of the current fill level of the tank, will recognize that in order to prevent a water shortage at 18:52, it is necessary to start the water purification system already at 17:00.

As the controller according to embodiments of the invention is able to predict that the water take-off point POU6 will be afflicted by a water shortage at 18:52 and to prevent this event by starting the water purification system already at 17:00, the controller will prevent a situation where an ongoing production process at a take-off point has to be aborted due to water shortage. Depending on the implementation variant, the controller may start the water purification system at 17:00 or even earlier, but typically not while the tank is filled to its capacity.

Alternatively, the controller described with reference to figure 6 can be configured to prevent a water shortage at 18:52 by preventing the take-off point POU6 from opening at its normal opening time (18:40).

According to some embodiments, the profiles used by the controller may cover multiple water consumption peaks, whereby a peak corresponds to an "open" state of a take-off point or a time period with a particularly high water consumption rate. In case a profile of a take-off point covers not only a single water consumption peak or a single "open-state" phase of a take-off point, but rather covers multiple peaks/"open state" phases, the accuracy of the prediction may be increased. For example, the take-off point POU6 may serve water to a coater for pharmaceuticals. The take-off point POU6 may typically be operated such that several individual withdrawal time periods are executed over a longer "working period" of time with several hours pauses in between. A profile of POU6 may cover a single withdrawal time period, i.e., a single water consumption peak. In other embodiments, the profile of POU6 may cover multiple peaks. For example, the profile may cover a time interval of about 2 h and 20 minutes and may be observed a first time between about 01:00 and 03:00 as indicated by box 602 and a second time between 15:00 and 20:00 as indicated by box 604. If such a multi-peak profile is available, subsequent individual withdrawals can already be included and the necessity to start necessary measures to prevent a water shortage (e.g. early water production) can sometimes be detected and triggered earlier. In the concrete example, the profile of the coater was changed from a single withdrawal to several connected withdrawals predicted to happen two times 602, 604 per day.

In this way, each single withdrawal at 01:00 or at 18:00 is assigned a series of multiple withdrawal peaks within the next 2 h 20 min, and thus the control system can start water production in advance and operate it continuously. In principle, the longer the profiles, the longer the forecast and the better the control. However, in all systems where the take-off points have a daily repeating pattern of open/closed states, the profiles are typically not longer than 24 hours.

### List of Reference Numerals

- 100: pure water supply system
- 102-116: take-off points
- 118: drain pipe
- 120: inflow pipe
- 122: water purification system
- 124: pump
- 126: purified water distribution system
- 128: inflow pipe to tank
- 130: discharge pipe from tank
- 132: pump
- 134: pump
- 136: storage tank
- 140: heating element
- 142: controller
- 144: data storage
- 146: take-off point water consumption profiles
- 148: Prioritization list
- 202-224: steps
- 302-316: steps
- 400: plot
- 402-406: water take-off profiles
- 408-412: aligned profiles in the plot
- 422: predicted amount of purified water consumed at future time t₁
- 424: predicted amount of purified water consumed at future time t₂
- 500: plot
- 502: threshold
- 504: fill level of tank
- 506: threshold
- 507: lower threshold
- 508: water consumption rate of a take-off point
- 510: purified water production rate
- 512: water consumption rate of another take-off point
- 602: occurrence of multi-peak profile
- 604: occurrence of multi-peak profile

## Claims

1. A pure water supply system (100) comprising
• a water purification system (122) for producing purified water at a controlled rate, wherein the purified water is to be used for a manufacturing process,
• a storage tank (136) for storing purified water, the storage tank being fluidly coupled to the water purification system (122),
• a purified water distribution system (126) having a plurality of water take-off points (102-116), the purified water distribution system being fluidically coupled to the storage tank,
• a controllable supply pump (134) for controlling the flow rate of the purified water in the purified water distribution system,
• a controller (142) being configured to
- control (302) the purified water production rate of the water purification system to provide a filling level of the storage tank,
- control (304) the supply pump to continuously pump the purified water in the purified water distribution system such that a minimum rate is maintained,
- receive (306) the actual filling level of the storage tank,
- receive (308) water take-off profiles of respective ones of the take-off points, wherein the take-off profiles are indicative of the purified water consumption rate of the respective take-off points observed in the past,
wherein the profiles are defined by a user via a GUI by selecting sub-intervals of an observation time interval, the sub- interval covering one or more time intervals wherein one of the take-off points was open and consumed water, or
wherein the profiles are determined automatically by a software program configured to analyze the observed purified water consumption rates of the take-off points during multiple observation time intervals in the past;
- predict (310), using the actual filling level and the received profiles, if a sufficient water supply can be maintained;
- in response to the prediction indicating an un-sufficient water supply, performing at least one action of a group of actions comprising:
o controlling (316) the purified water production rate of the water purification system to increase the water production to prevent the predicted purified water shortage for the manufacturing process.

2. The pure water supply system in accordance with claim 1, wherein the prediction in addition uses the actual water production rate of the water purification system as input.

3. The pure water supply system in accordance with any one of the previous claims, wherein the prediction is updated repeatedly taking into consideration the actual takeoff rates while assuming that the water take-off profiles are valid for the prediction.

4. The pure water supply system in accordance with any one of the previous claims, wherein the prediction comprises predicting if a sufficient water supply can be maintained when at least one further take-off point is opened, whereby the prediction takes into account in addition the water take-off profile of that at least one further take-off point.

5. The pure water supply system in accordance with any one of the previous claims, wherein the prediction takes into consideration at least the profiles of currently opened ones of the take-off points.

6. The pure water supply system in accordance with any one of the previous claims, wherein the prediction comprises:
- predicting, using the actual filling level and the profiles of the currently open take-off points, if a sufficient water supply can be maintained for the currently open take-off points;
- in response to determining that a sufficient water supply can be maintained for the currently open take-off points, predicting, using the actual filling level and the profiles of the currently open take-off points and the profiles of at least one further, currently closed one of the take-off points, if a sufficient water supply can be maintained for the currently open and the at least one further take-off points;
- in response to determining that a sufficient water supply cannot be maintained for the currently open take-off points, determining that the prediction indicates an un-sufficient water supply, and performing the at least one action.

7. The pure water supply system in accordance with any one of the previous claims, wherein using the profiles for the predictions comprises determining, for one or more of the water take-off points, an observed opening time of the take-off point, aligning the opening time within the take-off point's profile with the observed opening time of the take-off point, and using the future part of the aligned profile to predict future water take-off rates specified in this profile between the current time and a future time, and using the determined remaining water take-off rates as the predicted future water take-off rates of this water take-off point.

8. The pure water supply system in accordance with any one of the previous claims, wherein the controller is configured to:
- receive actual water take-off amounts measured for each open take-off point over one or more observation time periods,
- use the received, measured water take-off amounts for dynamically correcting the profiles of the take-off points such that deviations of the profiles from the received actual water take-off amounts measured during the observation time periods are reduced.

9. The pure water supply system in accordance with any of the previous claims, the at least one action being configurable in by a user.

10. The pure water supply system in accordance with any of the previous claims, wherein the controller is configured to perform the at least one action such that a decision if and when the purified water production rate is increased is performed such that at least one optimization parameter is minimized or maximized.

11. The pure water supply system of claim 10, wherein the at least one optimization parameter comprises the number status change events of one or more components of the water purification system between "switched-on" and "switched-off", wherein the prediction is performed such that the number of status change events is minimized.

12. The pure water supply system of claim 11, wherein the water purification system is a mechanical filtration based or reverse osmosis based purification system and wherein the components whose status change events are minimized are pumps.

13. The pure water supply system of any one of claims 10-12, wherein the at least one optimization parameter comprises a target fill level of the storage tank, wherein the prediction is performed such that the target fill level is minimized.

14. The pure water supply system of claim 13, wherein the storage tank comprises or is operably coupled to an anti-microbial sub-unit (140) configured to treat the pure water in the storage tank such that the amount of microbes in the tank is reduced, the anti-microbial sub-unit being preferably selected from a group comprising: a heating element, or a UV-light source or a water-ozonation system.

15. The pure water supply system in accordance with any of the previous claims, wherein the water purification system is selected from a group comprising:
- a Chlorination/Dechlorination system,
- a mechanical filtration system,
- an Ultraviolet Radiation system,
- an Ozonation system,
- a deionization system,
- a reverse osmosis system,
- a combination of one or more of the aforementioned water purification systems.

16. A method for supplying multiple pure water take-off points (102-116) with pure water, the method being implemented in a controller (142) of a pure water supply system (100) comprising the controller, a pure water storage tank (136), and a water purification system (122), the purified water to be used for a manufacturing process, the method comprising:
- controlling (302) the purified water production rate of the water purification system to provide a filling level of the pure water storage tank (136),
- controlling (304) a supply pump (134) to continuously pump purified water generated by the water purification system (122) in a purified water distribution system (126) such that a minimum flow rate of the purified water is maintained,
- receiving (306) the actual filling level of the storage tank,
- receiving (308) a water take-off profiles of respective ones of the take-off points, wherein the take-off profiles are indicative of the purified water consumption rate of the respective take-off points observed in the past,
wherein the profiles are defined by a user via a GUI by selecting sub-intervals of an observation time interval, the sub- interval covering one or more time intervals wherein one of the take-off points was open and consumed water, or
wherein the profiles are determined automatically by a software program configured to analyze the observed purified water consumption rates of the take-off points during multiple observation time intervals in the past
- predicting (310), using the actual filling level and the received profiles, if a sufficient water supply can be maintained,
- in response to the prediction indicating an un-sufficient water supply, performing at least one action of a group of actions comprising: controlling (316) the purified water production rate of the water purification system to increase the water production to prevent the predicted purified water shortage for the manufacturing process.

## Patentansprüche

1. Reinwasserversorgungssystem (100), umfassend
• ein Wasserreinigungssystem (122) zum Erzeugen von gereinigtem Wasser mit einer kontrollierten Rate, wobei das gereinigte Wasser für ein Herstellungsverfahren verwendet werden soll,
• einen Speichertank (136) zum Speichern von gereinigtem Wasser, wobei der Speichertank mit dem Wasserreinigungssystem (122) fluidführend verbunden ist,
• ein Verteilungssystem (126) für gereinigtes Wasser mit einer Vielzahl von Wasserentnahmestellen (102-116), wobei das Verteilungssystem für gereinigtes Wasser fluidführend mit dem Vorratstank verbunden ist,
• eine steuerbare Versorgungspumpe (134) zum Steuern der Durchflussmenge des gereinigten Wassers in dem Verteilungssystem für gereinigtes Wasser,
• eine Steuerung (142), die konfiguriert ist,
- die Produktionsrate des gereinigten Wassers des Wasserreinigungssystems zu steuern (302), um einen Füllstand des Vorratsbehälters zu gewährleisten,
- die Versorgungspumpe zu steuern (304), um das gereinigte Wasser kontinuierlich in das Verteilungssystem für gereinigtes Wasser zu pumpen, so dass eine Mindestrate aufrechterhalten wird,
- den tatsächlichen Füllstand des Vorratsbehälters zu empfangen (306),
- Wasserentnahmeprofile der jeweiligen Entnahmestellen zu empfangen (308), wobei die Entnahmeprofile die in der Vergangenheit beobachtete Verbrauchsrate von gereinigtem Wasser an den jeweiligen Entnahmestellen anzeigen,
wobei die Profile von einem Benutzer über eine grafische Benutzeroberfläche definiert werden, indem Teilintervalle eines Beobachtungszeitintervalls ausgewählt werden, wobei das Teilintervall ein oder mehrere Zeitintervalle abdeckt, in denen eine der Entnahmestellen geöffnet war und Wasser verbraucht hat, oder
wobei die Profile automatisch durch ein Softwareprogramm bestimmt werden, das so konfiguriert ist, dass es die beobachteten gereinigten Wasserverbrauchsraten der Entnahmestellen während mehrerer Beobachtungszeitintervalle in der Vergangenheit analysiert;
- Unter Verwendung des tatsächlichen Füllstands und der empfangenen Profile vorherzusagen (310), ob eine ausreichende Wasserversorgung aufrechterhalten werden kann;
- als Reaktion auf die Vorhersage, die eine unzureichende Wasserversorgung anzeigt, mindestens einer Aktion aus einer Gruppe von Aktionen, die Folgendes umfassen, durchzuführen:
o Steuern (316) der Produktionsrate von gereinigtem Wasser des Wasserreinigungssystems, um die Wasserproduktion zu erhöhen, um den vorhergesagten Mangel an gereinigtem Wasser für den Herstellungsprozess zu verhindern.

2. Reinwasserversorgungssystem nach Anspruch 1, wobei die Vorhersage zusätzlich die tatsächliche Wasserproduktionsrate des Wasserreinigungssystems als Eingabe verwendet.

3. Reinwasserversorgungssystem nach einem der vorhergehenden Ansprüche, wobei die Vorhersage unter Berücksichtigung der tatsächlichen Entnahmeraten wiederholt aktualisiert wird, wobei angenommen wird, dass die Wasserentnahmeprofile für die Vorhersage gültig sind.

4. Reinwasserversorgungssystem nach einem der vorhergehenden Ansprüche, wobei die Vorhersage die Vorhersage umfasst, ob eine ausreichende Wasserversorgung aufrechterhalten werden kann, wenn mindestens eine weitere Entnahmestelle geöffnet wird, wobei die Vorhersage zusätzlich das Wasserentnahmeprofil dieser mindestens einen weiteren Entnahmestelle berücksichtigt.

5. Reinwasserversorgungssystem nach einem der vorhergehenden Ansprüche, wobei die Vorhersage zumindest die Profile von aktuell geöffneten Entnahmestellen berücksichtigt.

6. Reinwasserversorgungssystem nach einem der vorhergehenden Ansprüche, wobei die Vorhersage umfasst:
- Vorhersage unter Verwendung des aktuellen Füllstands und der Profile der aktuell geöffneten Entnahmestellen, ob eine ausreichende Wasserversorgung für die aktuell geöffneten Entnahmestellen aufrechterhalten werden kann;
- als Reaktion auf die Feststellung, dass eine ausreichende Wasserversorgung für die gegenwärtig geöffneten Entnahmestellen aufrechterhalten werden kann, Vorhersage unter Verwendung des tatsächlichen Füllstands und der Profile der gegenwärtig geöffneten Entnahmestellen und der Profile von mindestens einer weiteren, gegenwärtig geschlossenen der Entnahmestellen, ob eine ausreichende Wasserversorgung für die gegenwärtig geöffnete und die mindestens eine weitere Entnahmestelle aufrechterhalten werden kann;
- als Reaktion auf die Feststellung, dass eine ausreichende Wasserversorgung für die derzeit offenen Entnahmestellen nicht aufrechterhalten werden kann, die Feststellung, dass die Vorhersage eine nicht ausreichende Wasserversorgung anzeigt, und die Durchführung der mindestens einen Aktion.

7. Reinwasserversorgungssystem nach einem der vorhergehenden Ansprüche, wobei die Verwendung der Profile für die Vorhersagen das Bestimmen einer beobachteten Öffnungszeit der Entnahmestelle für eine oder mehrere der Wasserentnahmestellen, das Ausrichten der Öffnungszeit innerhalb des Profils der Entnahmestelle mit der beobachteten Öffnungszeit der Entnahmestelle und das Verwenden des zukünftigen Teils des ausgerichteten Profils zum Vorhersagen zukünftiger Wasserentnahmeraten, die in diesem Profil zwischen der aktuellen Zeit und einer zukünftigen Zeit angegeben sind, und das Verwenden der bestimmten verbleibenden Wasserentnahmeraten als die vorhergesagten zukünftigen Wasserentnahmeraten dieser Wasserentnahmestelle umfasst.

8. Reinwasserversorgungssystem nach einem der vorhergehenden Ansprüche, wobei die Steuerung dazu eingerichtet ist,:
- die tatsächlichen Wasserentnahmemengen zu empfangen, die für jede offene Entnahmestelle über einen oder mehrere Beobachtungszeiträume gemessen wurden,
- die empfangenen, gemessenen Wasserentnahmemengen zum dynamischen Korrigieren der Profile der Entnahmestellen zu verwenden, so dass Abweichungen der Profile von den empfangenen, während der Beobachtungszeiträume gemessenen tatsächlichen Wasserentnahmemengen reduziert werden.

9. Reinwasserversorgungssystem nach einem der vorhergehenden Ansprüche, wobei die mindestens eine Aktion durch einen Benutzer konfigurierbar ist.

10. Reinwasserversorgungssystem nach einem der vorhergehenden Ansprüche, wobei die Steuerung so konfiguriert ist, dass sie die mindestens eine Aktion so durchführt, dass eine Entscheidung, ob und wann die Produktionsrate des gereinigten Wassers erhöht wird, so durchgeführt wird, dass mindestens ein Optimierungsparameter minimiert oder maximiert wird.

11. Reinwasserversorgungssystem nach Anspruch 10, wobei der mindestens eine Optimierungsparameter die Anzahl der Zustandsänderungsereignisse einer oder mehrerer Komponenten des Wasserreinigungssystems zwischen "eingeschaltet" und "ausgeschaltet" umfasst, wobei die Vorhersage so durchgeführt wird, dass die Anzahl der Zustandsänderungsereignisse minimiert wird.

12. Reinwasserversorgungssystem nach Anspruch 11, wobei das Wasserreinigungssystem ein auf mechanischer Filtration oder Umkehrosmose basierendes Reinigungssystem ist und wobei die Komponenten, deren Statusänderungsereignisse minimiert werden, Pumpen sind.

13. Reinwasserversorgungssystem nach einem der Ansprüche 10-12, wobei der mindestens eine Optimierungsparameter einen Zielfüllstand des Speichertanks umfasst, wobei die Vorhersage so durchgeführt wird, dass der Zielfüllstand minimiert wird.

14. Reinwasserversorgungssystem nach Anspruch 13, wobei der Speichertank eine antimikrobielle Untereinheit (140) umfasst oder funktionsmäßig mit dieser gekoppelt ist, die so konfiguriert ist, dass sie das Reinwasser in dem Speichertank so behandelt, dass die Menge an Mikroben in dem Tank reduziert wird, wobei die antimikrobielle Untereinheit vorzugsweise aus einer Gruppe ausgewählt ist, die umfasst: ein Heizelement oder eine UV-Lichtquelle oder ein Wasserozonierungssystem.

15. Reinwasserversorgungssystem nach einem der vorhergehenden Ansprüche, wobei das Wasserreinigungssystem aus einer Gruppe ausgewählt ist, die umfasst:
- ein Chlorierungs-/Dechlorierungssystem,
- ein mechanisches Filtersystem,
- ein Ultraviolett-Bestrahlungssystem
- ein Ozonisierungssystem,
- ein Entionisierungssystem,
- ein Umkehrosmose-System,
- eine Kombination aus einem oder mehreren der vorgenannten Wasserreinigungssysteme.

16. Verfahren zur Versorgung mehrerer Reinwasserentnahmestellen (102-116) mit Reinwasser, wobei das Verfahren in einer Steuerung (142) eines Reinwasserversorgungssystems (100) implementiert ist, das die Steuerung, einen Reinwasserspeichertank (136) und ein Wasserreinigungssystem (122) umfasst, wobei das gereinigte Wasser für einen Herstellungsprozess zu verwenden ist, wobei das Verfahren umfasst:
- Steuern (302) der Produktionsrate von gereinigtem Wasser des Wasserreinigungssystems, um einen Füllstand des Reinwasserspeichers (136) bereitzustellen,
- Steuern (304) einer Versorgungspumpe (134), um kontinuierlich gereinigtes Wasser, das von dem Wasserreinigungssystem (122) erzeugt wird, in ein Verteilungssystem (126) für gereinigtes Wasser zu pumpen, so dass eine Mindestdurchflussrate des gereinigten Wassers aufrechterhalten wird,
- Empfangen (306) des aktuellen Füllstands des Speichertanks,
- Empfangen (308) von Wasserentnahmeprofilen der jeweiligen Entnahmestellen, wobei die Entnahmeprofile die in der Vergangenheit beobachtete Verbrauchsrate von gereinigtem Wasser an den jeweiligen Entnahmestellen anzeigen,
wobei die Profile von einem Benutzer über eine grafische Benutzeroberfläche definiert werden, indem Teilintervalle eines Beobachtungszeitintervalls ausgewählt werden, wobei das Teilintervall ein oder mehrere Zeitintervalle abdeckt, in denen eine der Entnahmestellen geöffnet war und Wasser verbraucht hat, oder
wobei die Profile automatisch durch ein Softwareprogramm bestimmt werden, das so konfiguriert ist, dass es die beobachteten gereinigten Wasserverbrauchsraten der Entnahmestellen während mehrerer Beobachtungszeitintervalle in der Vergangenheit analysiert
- Vorhersage (310) unter Verwendung des tatsächlichen Füllstands und der empfangenen Profile, ob eine ausreichende Wasserversorgung aufrechterhalten werden kann,
- als Reaktion auf die Vorhersage, die eine unzureichende Wasserversorgung anzeigt, Durchführen mindestens einer Aktion aus einer Gruppe von Aktionen, die Folgendes umfassen: Steuern (316) der Produktionsrate von gereinigtem Wasser des Wasseraufbereitungssystems, um die Wasserproduktion zu erhöhen, um den vorhergesagten Mangel an gereinigtem Wasser für den Herstellungsprozess zu verhindern.

## Revendications

1. Système d'alimentation en eau pure (100) comprenant
• un système de purification d'eau (122) destiné à produire de l'eau purifiée à un débit contrôlé, dans lequel l'eau purifiée est destinée à être utilisée dans un processus de fabrication,
• un réservoir de stockage (136) destiné à stocker l'eau purifiée, le réservoir de stockage étant couplé de manière fluidique au système de purification d'eau (122),
• un système de distribution d'eau purifiée (126) comportant une pluralité de points de prélèvement d'eau (102-116), le système de distribution d'eau purifiée étant couplé de manière fluidique au réservoir de stockage,
• une pompe d'alimentation contrôlable (134) pour contrôler le débit de l'eau purifiée dans le système de distribution d'eau purifiée,
• un contrôleur (142) configuré pour
- commander (302) le débit de production d'eau purifiée du système de purification d'eau afin d'assurer un niveau de remplissage du réservoir de stockage,
- commander (304) la pompe d'alimentation pour pomper en continu l'eau purifiée dans le système de distribution d'eau purifiée de manière à maintenir un débit minimal,
- recevoir (306) le niveau de remplissage réel du réservoir de stockage,
- recevoir (308) les profils de prélèvement d'eau des points de prélèvement respectifs, les profils de prélèvement étant indicatifs du débit de consommation d'eau purifiée des points de prélèvement respectifs observé dans le passé,
dans lequel les profils sont définis par un utilisateur via une interface graphique utilisateur en sélectionnant des sous-intervalles d'un intervalle de temps d'observation, le sous-intervalle couvrant un ou plusieurs intervalles de temps pendant lesquels l'un des points de prélèvement était ouvert et a consommé de l'eau, ou
dans lequel les profils sont déterminés automatiquement par un programme logiciel configuré pour analyser les taux de consommation d'eau purifiée observés des points de prélèvement pendant plusieurs intervalles de temps d'observation dans le passé ;
- prédire (310), à l'aide du niveau de remplissage réel et des profils reçus, si une alimentation en eau suffisante peut être maintenue ;
- en réponse à la prédiction indiquant une alimentation en eau insuffisante, effectuer au moins une action d'un groupe d'actions comprenant :
o contrôler (316) le débit de production d'eau purifiée du système de purification de l'eau afin d'augmenter la production d'eau pour éviter la pénurie d'eau purifiée prévue pour le processus de fabrication.

2. Système d'alimentation en eau pure selon la revendication 1, dans lequel la prédiction utilise en outre le débit de production d'eau réel du système de purification d'eau comme entrée.

3. Système d'alimentation en eau pure selon l'une quelconque des revendications précédentes, dans lequel la prédiction est mise à jour de manière répétée en tenant compte des débits de prélèvement réels tout en supposant que les profils de prélèvement d'eau sont valables pour la prédiction.

4. Système d'alimentation en eau pure selon l'une quelconque des revendications précédentes, dans lequel la prévision comprend la prévision de la possibilité de maintenir une alimentation en eau suffisante lorsqu'au moins un autre point de prélèvement est ouvert, la prévision tenant compte en outre du profil de prélèvement d'eau de cet au moins un autre point de prélèvement.

5. Système d'alimentation en eau pure selon l'une quelconque des revendications précédentes, dans lequel la prédiction prend en compte au moins les profils des points de prélèvement actuellement ouverts.

6. Système d'alimentation en eau pure selon l'une quelconque des revendications précédentes, dans lequel la prédiction comprend :
- la prédiction, à l'aide du niveau de remplissage réel et des profils des points de prélèvement actuellement ouverts, si une alimentation en eau suffisante peut être maintenue pour les points de prélèvement actuellement ouverts ;
- en réponse à la détermination qu'une alimentation en eau suffisante peut être maintenue pour les points de prélèvement actuellement ouverts, prédire, à l'aide du niveau de remplissage réel et des profils des points de prélèvement actuellement ouverts et des profils d'au moins un autre point de prélèvement actuellement fermé, si une alimentation en eau suffisante peut être maintenue pour les points de prélèvement actuellement ouverts et au moins un autre point de prélèvement ;
- en réponse à la détermination qu'une alimentation en eau suffisante ne peut pas être maintenue pour les points de prélèvement actuellement ouverts, déterminer que la prédiction indique une alimentation en eau insuffisante, et effectuer la au moins une action.

7. Système d'alimentation en eau pure selon l'une quelconque des revendications précédentes, dans lequel l'utilisation des profils pour les prédictions comprend la détermination, pour un ou plusieurs des points de prélèvement d'eau, d'un temps d'ouverture observé du point de prélèvement, l'alignement du temps d'ouverture dans le profil du point de prélèvement avec le temps d'ouverture observé du point de prélèvement, et l'utilisation de la partie future du profil aligné pour prédire les débits de prélèvement d'eau futurs spécifiés dans ce profil entre l'instant actuel et un instant futur, et l'utilisation des débits de prélèvement d'eau restants déterminés comme débits de prélèvement d'eau futurs prédits de ce point de prélèvement d'eau.

8. Système d'alimentation en eau pure selon l'une quelconque des revendications précédentes, dans lequel le contrôleur est configuré pour :
- recevoir les quantités d'eau prélevées réelles mesurées pour chaque point de prélèvement ouvert pendant une ou plusieurs périodes d'observation,
- utiliser les quantités d'eau prélevées mesurées reçues pour corriger dynamiquement les profils des points de prélèvement de manière à réduire les écarts des profils par rapport aux quantités d'eau prélevées réelles reçues mesurées pendant les périodes d'observation.

9. Système d'alimentation en eau pure selon l'une quelconque des revendications précédentes, dans lequel au moins une action est configurable par un utilisateur.

10. Système d'alimentation en eau pure selon l'une quelconque des revendications précédentes, dans lequel le contrôleur est configuré pour effectuer la au moins une action de telle sorte qu'une décision quant à l'opportunité et au moment d'augmenter le débit de production d'eau purifiée soit prise de manière à minimiser ou maximiser au moins un paramètre d'optimisation.

11. Système d'alimentation en eau pure selon la revendication 10, dans lequel le au moins un paramètre d'optimisation comprend le nombre d'événements de changement d'état d'un ou plusieurs composants du système de purification d'eau entre « allumé » et « éteint », dans lequel la prédiction est effectuée de telle sorte que le nombre d'événements de changement d'état soit minimisé.

12. Système d'alimentation en eau pure selon la revendication 11, dans lequel le système de purification de l'eau est un système de purification basé sur une filtration mécanique ou sur une osmose inverse et dans lequel les composants dont les événements de changement d'état sont minimisés sont des pompes.

13. Système d'alimentation en eau pure selon l'une quelconque des revendications 10 à 12, dans lequel le au moins un paramètre d'optimisation comprend un niveau de remplissage cible du réservoir de stockage, dans lequel la prédiction est effectuée de telle sorte que le niveau de remplissage cible soit minimisé.

14. Système d'alimentation en eau pure selon la revendication 13, dans lequel le réservoir de stockage comprend ou est couplé de manière opérationnelle à une sous-unité antimicrobienne (140) configurée pour traiter l'eau pure dans le réservoir de stockage de manière à réduire la quantité de microbes dans le réservoir, la sous-unité antimicrobienne étant de préférence choisie parmi un groupe comprenant : un élément chauffant, ou une source de lumière UV ou un système d'ozonation de l'eau.

15. Système d'alimentation en eau pure selon l'une quelconque des revendications précédentes, dans lequel le système de purification de l'eau est choisi parmi un groupe comprenant :
- un système de chloration/déchloration,
- un système de filtration mécanique,
- un système de rayonnement ultraviolet,
- un système d'ozonation,
- un système de déionisation,
- un système d'osmose inverse,
- une combinaison d'un ou plusieurs des systèmes de purification d'eau susmentionnés.

16. Procédé pour alimenter en eau pure plusieurs points de prélèvement d'eau pure (102-116), le procédé étant mis en œuvre dans un contrôleur (142) d'un système d'alimentation en eau pure (100) comprenant le contrôleur, un réservoir de stockage d'eau pure (136) et un système de purification de l'eau (122), l'eau purifiée étant destinée à être utilisée dans un processus de fabrication, le procédé comprenant :
- le contrôle (302) du débit de production d'eau purifiée du système de purification d'eau afin d'assurer un niveau de remplissage du réservoir de stockage d'eau pure (136) ;
- contrôler (304) une pompe d'alimentation (134) pour pomper en continu l'eau purifiée générée par le système de purification d'eau (122) dans un système de distribution d'eau purifiée (126) de manière à maintenir un débit minimal de l'eau purifiée,
- recevoir (306) le niveau de remplissage réel du réservoir de stockage,
- recevoir (308) un profil de prélèvement d'eau de chacun des points de prélèvement, lesdits profils de prélèvement étant indicatifs du débit de consommation d'eau purifiée des points de prélèvement respectifs observé dans le passé,
dans lequel les profils sont définis par un utilisateur via une interface graphique utilisateur en sélectionnant des sous-intervalles d'un intervalle de temps d'observation, le sous-intervalle couvrant un ou plusieurs intervalles de temps pendant lesquels l'un des points de prélèvement était ouvert et a consommé de l'eau, ou
dans lequel les profils sont déterminés automatiquement par un programme logiciel configuré pour analyser les taux de consommation d'eau purifiée observés des points de prélèvement pendant plusieurs intervalles de temps d'observation dans le passé
- prédire (310), à l'aide du niveau de remplissage réel et des profils reçus, si une alimentation en eau suffisante peut être maintenue,
- en réponse à la prédiction indiquant une alimentation en eau insuffisante, effectuer au moins une action parmi un groupe d'actions comprenant : contrôler (316) le débit de production d'eau purifiée du système de purification d'eau afin d'augmenter la production d'eau pour empêcher la pénurie d'eau purifiée prédite pour le processus de fabrication.
